# EUROPÄISCHE PATENTSCHRIFT

(11) **EP 3 758 960 B1**
(45) Veröffentlichungstag und Bekanntmachung des Hinweises auf die Patenterteilung: **02.08.2023**
(21) Anmeldenummer: 19706588.1
(22) Anmeldetag: 20.02.2019
(51) Int. Cl.: B60D 1/48, B60D 1/52

(54) **TRÄGERANORDNUNG EINES LASTENTRÄGERS ODER EINER KUPPLUNGSEINRICHTUNG**
CARRIER ARRANGEMENT OF A LOAD CARRIER OR A COUPLING DEVICE
SYSTÈME PORTEUR D'UNE GALERIE OU D'UN ÉQUIPEMENT DE COUPLAGE

(30) Priorität: 27.02.2018 DE 102018104490; 11.06.2018 DE 102018113909
(43) Veröffentlichungstag der Anmeldung: 06.01.2021
(73) Patentinhaber: WESTFALIA - Automotive GmbH, 33378 Rheda-Wiedenbrück (DE)
(72) Erfinder: ANGERMANN, Kay, 04720 Döbeln (DE); KUHLEN, Arne, 59320 Ennigerloh (DE); STACHURSKI, Sergei, 33378 Rheda-Wiedenbrück (DE); WYRWICH, Martin, 33378 Rheda-Wiedenbrück (DE)
(74) Vertreter: Patentanwälte Bregenzer und Reule Partnerschaftsgesellschaft mbB
(86) Internationale Anmeldenummer: PCT/EP2019/054178
(87) Internationale Veröffentlichungsnummer: WO 2019/166292

(56) Entgegenhaltungen:
- EP-A1- 2 803 508
- EP-A1- 3 150 409
- EP-A2- 2 711 209
- WO-A2-02/062601
- DE-A1-102010 045 104
- DE-U- 7 205 182
- DE-U- 7 320 517
- GB-A- 2 020 240
- NZ-A- 579 770
- US-A- 5 511 813
- US-B2- 8 272 663

## Beschreibung

Die Erfindung betrifft eine Trägeranordnung für ein Heck eines Fahrzeugs, wobei die Trägeranordnung einen Bestandteil eines an dem Fahrzeug lösbar befestigbaren, insbesondere vor das Heck des Fahrzeugs bei Gebrauch vorstehenden, Lastenträgers oder einen Bestandteil einer an einem Heck einer Karosserie des Fahrzeugs angeordneten oder befestigbaren Kupplungseinrichtung bildet, gemäß dem Oberbegriff des Anspruchs 1.

Eine derartige Trägeranordnung ist beispielsweise in US 8,272,663 B2 beschrieben.

Ein Lastenträger gemäß DE 10 2011 122 285 A1, der beispielsweise als ein Tragegestell eines Lastenträgers ausgestaltet ist, steht beispielsweise nach hinten vor das Heck des Fahrzeugs, beispielsweise eines Personenkraftwagens, vor und wird mit einer Traglast belastet, zum Beispiel Fahrrädern oder dergleichen. Die Trägeranordnung ist beispielsweise als ein Tragegestell mit einem oder mehreren Tragprofilen ausgestaltet, die bei einer hohen Belastung, zum Beispiel durch Elektro-Fahrräder, verformt werden.

Die Trägeranordnung kann aber wie in DE 10 2016 111 174 A1 beschrieben beispielsweise auch einen Querträger und/oder Seitenträger aufweisen, die an einem Heck des Fahrzeugs befestigbar oder befestigt sind. Am Querträger ist beispielsweise eine Halterung für einen Kupplungsarm zum Ankuppeln eines Anhängers angeordnet. Die Trägeranordnung kann ein Tragprofil aufweisen, wird aber in der Regel mehrere Tragprofile umfassen. Das mindestens eine Tragprofil ist beim Fahrbetrieb, insbesondere in einer Unfallsituation, stark belastet. So kann beispielsweise der Kupplungsarm als eine Art Hebel Kräfte auf den Querträger ausüben, sodass dieser eine hohe Torsionsbelastung erfährt. Die Situation wird insbesondere dann noch problematischer, wenn der Querträger beispielsweise einen Schutz für eine Batterieanordnung, einen Tank oder dergleichen des Fahrzeugs bildet.

Es ist daher die Aufgabe der vorliegenden Erfindung, eine Trägeranordnung mit mindestens einem belastbareren Tragprofil bereitzustellen.

Zur Lösung der Aufgabe ist eine Trägeranordnung gemäß der technischen Lehre des Anspruchs 1 vorgesehen.

Es ist ein Grundgedanke der vorliegenden Erfindung, dass das Tragprofil durch das Versteifungsprofil verstärkt und/oder versteift ist. Dabei ist es möglich, dass das Versteifungsprofil das Tragprofil im Bereich des Versteifungsabschnitts sozusagen ummantelt oder einhaust. Es ist aber auch umgekehrt möglich, dass das Versteifungsprofil ganz oder teilweise im Innenraum des Tragprofils aufgenommen ist. Das Tragprofil und das Versteifungsprofil sind längs und/oder quer zu der Längsachse des Tragprofils oder des Versteifungsprofils vorteilhaft unverlierbar aneinander gehalten. Es ist vorteilhaft, wenn das Tragprofil und das Versteifungsprofil bezüglich der Längsachse des Tragprofils verschiebefest aneinander gehalten sind, beispielsweise formschlüssig und/oder kraftschlüssig und/oder stoffschlüssig.

Das Tragprofil und das Versteifungsprofil sind vorteilhaft durch voneinander zunächst separate Grundkörper gebildet, die fest miteinander verbunden sind. Beispielsweise sind das Tragprofil und das Versteifungsprofil durch zunächst voneinander separate Profilteile gebildet, die miteinander verbunden werden.

Das Fahrzeug ist vorzugsweise ein Personenkraftwagen, kann aber auch ein Lastkraftwagen, ein Transporter oder dergleichen sein. Bei dem Fahrzeug kann es sich um ein Elektrofahrzeug, oder um ein Fahrzeug mit Verbrennungsmotor handeln, aber auch um ein Hybrid-Fahrzeug, welches zwei durch unterschiedliche Energieträger betreibbare Antriebe aufweist, beispielsweise einen Elektromotor und einen Verbrennungsmotor.

Das Tragprofil und das Versteifungsprofil haben zweckmäßigerweise voneinander verschiedene Querschnittsgeometrien.

Das Tragprofil und das Versteifungsprofil sind zunächst voneinander separate Profilkörper, die durch einen Fertigungsprozess aneinander angeordnet worden sind.

Es ist möglich, dass an dem Tragprofil bezüglich seiner Längserstreckung mehrere Versteifungsprofile hintereinander angeordnet sind. Die Versteifungsprofile können einander bezüglich der Längsachse des Tragprofils überlappen oder einen Abstand zueinander aufweisen.

Es können in einer Längsposition bezüglich der Längsachse des Tragprofils nur ein Versteifungsprofil oder mindestens zwei oder weitere Versteifungsprofile vorgesehen sein. So können beispielsweise an einer Oberseite und einer Unterseite oder einer Vorderseite und einer Rückseite in Gebrauchslage des Tragprofils jeweils ein Versteifungsprofil vorgesehen sein.

Es ist weiterhin möglich, dass in einem Innenraum des Tragprofils ein erstes Versteifungsprofil angeordnet ist und das Tragprofil in einen Innenraum eines zweiten Versteifungsprofils eingreift. Das erste und das zweite Versteifungsprofil können bezüglich der Längsachse des Tragprofils einen Längsabstand zueinander aufweisen, aber auch einander überlappen oder an derselben Längsposition der Längsachse angeordnet sein.

Des Weiteren ist eine geschachtelte Konfiguration derart möglich, dass beispielsweise im Innenraum des Tragprofils ein erstes Versteifungsprofil angeordnet ist, das einen Innenraum begrenzt, in welchem ein weiteres Versteifungsprofil angeordnet ist.

Das Tragprofil und/oder das Versteifungsprofil sind vorzugsweise Rohrkörper oder umfassen Rohrkörper, insbesondere im Bereich des Versteifungsabschnitts und/oder neben dem Versteifungsabschnitt. Das Versteifungsprofil kann in der Art einer Muffe ausgestaltet sein, in welche das Tragprofil eingreift. Das Tragprofil kann aber auch ein Aufnahmerohr für das Versteifungsprofil bilden.

Der Innenraum des Tragprofils ist durch die Tragprofil-Umfangswand entlang zumindest eines Abschnitts der Längsachse des Tragprofils vorteilhaft umfangsseitig vollständig oder im Wesentlichen vollständig begrenzt.

Es ist vorteilhaft, wenn das Versteifungsprofil unverlierbar an dem Tragprofil anhand einer unmittelbaren und schraubenlosen Verbindung mit dem Tragprofil und der Abstützung des Versteifungsprofils an dem Tragprofil gehalten ist. Das Versteifungsprofil ist also ohne einen zusätzlichen Haltekörper am Tragprofil gehalten, beispielsweise formschlüssig und/oder stoffschlüssig und/oder kraftschlüssig. Dies ist beispielsweise durch die Formgestaltung des Tragprofils und/oder des Versteifungsprofils in dem Versteifungsabschnitt realisierbar.

Vorzugsweise hat beispielsweise das Versteifungsprofil eine das Tragprofil bezüglich seiner Längsachse um mehr als 180° oder mehr als die Hälfte des Umfangs umgreifende Innenumfangskontur oder das Tragprofil eine das Versteifungsprofil um mehr als 180° oder mehr als die Hälfte des Umfangs bezüglich seiner Längsachse umgreifende Innenumfangskontur, sodass das Tragprofil und das Versteifungsprofil quer zur Längsachse unverlierbar, insbesondere fest, miteinander verbunden sind.

Das Versteifungsprofil ist vorteilhaft ein von einer Verbindungskomponente zur Verbindung des Tragprofils mit einem weiteren Bauteil, insbesondere der Halterung und/oder einem weiteren Profil der Trägeranordnung, separates Bauteil. Mithin ist die Halterung beispielsweise für die Anhängekupplung oder das Lastenträger-Kupplungsteil von dem Versteifungsprofil separat.

Das Tragprofil oder das Versteifungsprofil oder beide sind zweckmäßigerweise als einstückige Körper ausgestaltet. Die Tragprofil-Umfangswand und/oder die Versteifungsprofil-Wandabschnitte sind vorzugsweise jeweils einstückig oder aus einem einzigen Rohling hergestellt, beispielsweise durch Extrusion, Umformung oder dergleichen. Es ist aber auch möglich, dass die Tragprofil-Umfangswand aus mehreren stoffschlüssig miteinander verbundenen, beispielsweise miteinander verschweißten, Umfangswandabschnitten besteht. Auch die Versteifungsprofil-Wandabschnitte können stoffschlüssig miteinander verbunden sein, beispielsweise durch eine Verschweißung oder dergleichen.

Vorteilhaft ist vorgesehen, dass die Umfangswände des Tragprofils und/oder die Wandabschnitte des Versteifungsprofils in dem Versteifungsabschnitt um die Längsachse herum vollständig und/oder ringförmig geschlossen sind. Mithin sind also eine geschlossene Umfangswand des Tragprofils oder eine geschlossene Wand, die in diesem Fall ebenfalls eine Umfangswand bildet, des Versteifungsprofils vorteilhaft. Die Versteifungsprofil-Wandabschnitte oder die Umfangswand des Tragprofils bilden vorteilhaft eine um die Längsachse des Tragprofils oder des Versteifungsprofils ringförmig geschlossene Umfangswand.

Ein vorteilhaftes Konzept sieht vor, dass das Tragprofil neben dem Versteifungsabschnitt mindestens einen Abschnitt aufweist, bei dem die Tragprofil-Umfangswand um die Längsachse herum vollständig und/oder ringförmig geschlossen ist. So ist es also beispielsweise möglich, dass das Tragprofil einen geschlossenen Abschnitt aufweist, bei dem die Tragprofil-Umfangswand sozusagen geschlossen ist. Es ist möglich, dass die Tragprofil-Umfangswand in dem geschlossenen Abschnitt eine seitliche Öffnung aufweist, d. h. dass das Tragprofil beispielsweise etwa U-förmig ist. Bezüglich der Längsachse neben der geschlossenen Umfangswand wiederum ist der Versteifungsabschnitt vorgesehen, wo die Umfangswand des Tragprofils Durchbrüche, Aussparungen oder dergleichen aufweisen kann, was noch deutlicher wird.

Es kann vorgesehen sein, dass das Versteifungsprofil und/oder das Tragprofil, insbesondere im Bereich des Versteifungsabschnitts, einen runden Querschnitt und/oder einen polygonalen Querschnitt, insbesondere einen rechteckigen oder quadratischen Querschnitt, aufweisen. Mithin sind also beliebige Querschnitte bei Versteifungsprofil oder Tragprofil möglich, beispielsweise im Wesentlichen polygonale Querschnitte, wobei die Kantenbereiche eckig oder ausgerundet sein können. Aber auch runde, insbesondere kreisrunde, ovale oder elliptische Querschnitte sind bei dem Tragprofil und bei dem Versteifungsprofil möglich.

Ein Versteifungsprofil oder Tragprofil mit einem polygonalen Querschnitt kann in verschiedenen Winkellagen bezüglich seiner Längsachse angeordnet sein. So ist es beispielsweise möglich, dass Wandabschnitte, beispielsweise Umfangswandabschnitte des Tragprofils oder Seitenwandabschnitte des Versteifungsprofils, in Gebrauchslage etwa horizontal verlaufen, aber auch schräg zur Horizontalen verlaufen können. Des Weiteren ist es möglich, dass Kantenbereiche des Tragprofils oder des Versteifungsprofils derart orientiert sind, dass das jeweilige Profil sozusagen auf der Kante steht. Von dem Kantenbereich können sich beispielsweise Seitenwände des Profils nach schräg unten oder schräg oben weg erstrecken.

Vorteilhaft ist es, wenn mindestens ein Versteifungsprofil-Wandabschnitt flächig an der Umfangswand des Tragprofils anliegt. So können beispielsweise das Tragprofil und das Versteifungsprofil plane Wandabschnitte aufweisen, die flächig aneinander anliegen, sodass das eine Profil am anderen Profil abgestützt ist. Weiterhin möglich ist es, dass beispielsweise runde Wandabschnitte, also Wandabschnitte, die quer zur Längsachse Krümmungen aufweisen, des Tragprofils und des Versteifungsprofils flächig aneinander anliegen. Die flächig aneinander anliegenden Wandabschnitte können miteinander verbunden sein, beispielsweise stoffschlüssig miteinander verbunden sein, aber auch nur lose aneinander anliegen.

Vorzugsweise ist vorgesehen, dass das Versteifungsprofil vollständig im Innenraum des Tragprofils aufgenommen ist und nicht vor die Umfangswand des Tragprofils vorsteht. Somit wird beispielsweise das Volumen oder die Außenkontur des Tragprofils nicht durch das Versteifungsprofil vergrößert. Vielmehr passt das Versteifungsprofil sozusagen genau in den Innenraum des Tragprofils hinein.

Möglich ist es, dass das Versteifungsprofil in dem Versteifungsabschnitt vor eine Außenumfangskontur des Tragprofils an mindestens einer Seite, insbesondere an einander entgegengesetzten Seiten, vorsteht. Es ist zum Beispiel möglich, dass das Versteifungsprofil in Fahrzeuglängsrichtung oder bezüglich der Fahrzeuglängsachse des Fahrzeugs nach hinten vor das Tragprofil vorsteht. Das Versteifungsprofil kann aber auch beispielsweise nach oben oder unten oder in Fahrzeuglängsrichtung oder bezüglich der Fahrzeuglängsachse des Fahrzeugs nach vorn vor das Tragprofil vorstehen. Ein Teil des Versteifungsprofils ist jedoch im Innenraum des Tragprofils aufgenommen.

Erfindungsgemäß ist vorgesehen, dass bei einer Komponente von Tragprofil oder Versteifungsprofil eine Aussparung vorhanden ist, in die die andere Komponente von Tragprofil oder Versteifungsprofil eingreift. Die Aussparung verläuft zweckmäßigerweise parallel zur Längsachse oder schräg geneigt in einem flachen Winkel, von beispielsweise maximal 5° oder maximal 3°, zur Längsachse des Tragprofils. So kann beispielsweise an der Tragprofil-Umfangswand eine Aussparung vorgesehen sein, in der das Versteifungsprofil ganz oder teilweise aufgenommen ist. Dabei ist es möglich, dass das Versteifungsprofil vor die Außenumfangskontur des Tragprofils quer zur Längsachse oder Querschnittskontur des Tragprofils vorsteht. Es ist aber auch möglich, dass das Versteifungsprofil in die Aussparung des Tragprofils vollständig eintaucht, sodass beispielsweise eine Seitenwand des Versteifungsprofils nicht vor eine Außenumfangskontur oder Querschnittskontur des Tragprofils vorsteht oder sogar vor diese zurücksteht, sodass eine Vertiefung gebildet ist.

Ein vorteilhaftes Konzept sieht vor, dass sich das Versteifungsprofil parallel oder im Wesentlichen parallel zur Längsachse des Tragprofils neben mindestens einem Gurtabschnitt des Tragprofils erstreckt, insbesondere zwischen zwei derartigen Gurtabschnitten angeordnet ist. Beispielsweise können die Gurtabschnitte sozusagen einen oberen Gurt und/oder einem unteren Gurt in einer typischen Gebrauchslage der Trägeranordnung bilden. Das Versteifungsprofil ist vorzugsweise formschlüssig und/oder stoffschlüssig mit dem Gurtabschnitt oder den Gurtabschnitten verbunden und/oder ist an dem mindestens einen Gurtabschnitt oder den Gurtabschnitten abgestützt.

An sich ist es möglich, dass ein derartiger Gurtabschnitt beispielsweise von einer planen Wandfläche gebildet ist, von der kein Seitenschenkel absteht. Bevorzugt ist es, wenn der mindestens eine Gurtabschnitt mindestens zwei quer zur Längsachse zueinander winkelige und/oder gekrümmte, insbesondere im Querschnitt U-förmig oder L-förmig oder V-förmig angeordnete, und sich entlang der Längsachse erstreckende Tragprofil-Umfangswandabschnitte aufweist. Ein derartiger Gurtabschnitt ist steifer als eine lediglich plane Wandfläche.

Zwar wurde eingangs erläutert, dass das Versteifungsprofil zweckmäßigerweise ein geschlossenes Profil darstellt oder durch ein umfangsseitig geschlossenes Profil gebildet ist. Es ist z.B. möglich, dass die Versteifungsprofil-Wandabschnitte eine Umfangswand bilden oder Bestandteile einer Umfangswand des Versteifungsprofils bilden.

Es ist aber auch möglich, dass das Versteifungsprofil einen Grundschenkel und mindestens einen davon abstehenden Seitenschenkel aufweist.

Bevorzugt ist es, wenn das Versteifungsprofil einen C-förmigen, U-förmigen, V-förmigen, wie E-förmigen, W-förmigen, T-förmigen oder L-förmigen Querschnitt aufweist.

Es kann vorteilhaft vorgesehen sein, dass ein Grundschenkel des Versteifungsprofils außerhalb des Innenraums des Tragprofils angeordnet ist und mindestens ein von dem Grundschenkel abstehender Schenkel des Versteifungsprofils, insbesondere alle von dem Grundschenkel abstehende Schenkel, in den Innenraum des Tragprofils eingreift. Prinzipiell möglich ist aber auch, dass das Versteifungsprofil, wenn es einen Grundschenkel und mindestens einen davon abstehenden Seitenschenkel aufweist, vollständig im Innenraum des Tragprofils angeordnet ist, d. h. dass auch der Grundschenkel im Innenraum des Tragprofils angeordnet ist.

Der außerhalb des Tragprofils angeordnete Grundschenkel des Versteifungsprofils kann einen Abstand zu dem Tragprofil aufweisen. In dem Abstand kann beispielsweise eine elastische Masse, Luft oder dergleichen angeordnet sein. Bevorzugt ist jedoch, dass sich der Grundschenkel an der Umfangswand des Tragprofils abstützt und/oder mit der Umfangswand des Tragprofils stoffschlüssig und/oder formschlüssig verbunden ist. Somit kann der Grundschenkel die Umfangswand unmittelbar versteifen.

Nachfolgend werden geometrische Konzepte vorgestellt:
Es ist bevorzugt, dass in Gebrauchslage der Trägeranordnung eine vertikale Höhenerstreckung des Tragprofils quer zu seiner Längsachse größer als eine vertikale Höhenerstreckung des Versteifungsprofils und/oder ein Abstand zwischen oberen und unteren Tragprofil-Umfangswandabschnitten des Tragprofils größer als ein Abstand zwischen oberen und unteren Versteifungsprofil-Wänden ist. Mithin ist das Tragprofil also in Gebrauchslage beispielsweise vertikal höher als das Versteifungsprofil. Dabei ist es möglich, dass das Tragprofil in Gebrauchslage auch breiter, d. h. in horizontaler Richtung breiter, als das Versteifungsprofil ist. Es ist aber auch die nachfolgende Konfiguration vorteilhaft:

Bevorzugt ist vorgesehen, dass in Gebrauchslage der Trägeranordnung eine horizontale Tiefenerstreckung des Tragprofils quer zu seiner Längsachse kleiner als eine horizontale Tiefenerstreckung des Versteifungsprofils und/oder ein Abstand zwischen horizontal am weitesten voneinander entfernten Tragprofil-Umfangswandabschnitten des Tragprofils kleiner als ein Abstand zwischen horizontal am weitesten voneinander entfernten Versteifungsprofil-Wänden ist. Mithin ist also das Tragprofil horizontal schmaler als das Versteifungsprofil.

Das Tragprofil und das Versteifungsprofil können beispielsweise eine Flachgestalt aufweisen, wobei die Umfangswand des Tragprofils oben und unten verlaufende Schmalseiten aufweist, während das Versteifungsprofil zwischen seinen oberen und unteren Wandabschnitten gegenüber diesen oberen und unteren Wandabschnitten schmalere Seitenwandabschnitte aufweist.

Das Tragprofil und das Versteifungsprofil können quer zur Längsachse eine beispielsweise L-förmige, T-förmige oder kreuzförmige Außenumfangskontur aufweisen. Mindestens ein Schenkel einer derartigen Außenumfangskontur wird durch das Tragprofil und mindestens ein Schenkel der Außenumfangskontur durch das Versteifungsprofil gebildet.

Es ist möglich, dass sich der Versteifungsabschnitt bis zu einem Längsende des Tragprofils erstreckt. Es ist aber auch möglich, dass mindestens ein Längsende, insbesondere beide Längsenden, des Tragprofils nicht durch das Versteifungsprofil versteift sind. Dabei ist es möglich, dass sich das Versteifungsprofil zwar bis zum jeweiligen Längsendbereich des Tragprofils erstreckt, jedoch nicht bis zum Längsende. An dem durch das Versteifungsprofil versteiften Längsendbereich des Tragprofils ist dieses beispielsweise mit einem weiteren Körper, beispielsweise einem Seitenträger der Trägeranordnung, verbunden.

Es kann vorgesehen sein, dass das Tragprofil im Wesentlichen über seine gesamte Länge durch das Versteifungsprofil versteift ist. Es ist aber auch möglich, dass das Tragprofil nur über einen Teilabschnitt seiner Länge durch das Versteifungsprofil versteift ist. So kann beispielsweise nur ein mittlerer Abschnitt bezogen auf eine Längserstreckung des Tragprofils durch ein Versteifungsprofil versteift sein, während die Längsendbereiche nicht durch ein erfindungsgemäß angeordnetes Versteifungsprofil versteift sind oder anderweitig versteift sind. Es ist aber auch möglich, dass beispielsweise die Längsendbereiche des Tragprofils durch jeweils ein Versteifungsprofil oder mehrere Versteifungsprofile versteift sind, während der mittlere Abschnitt des Tragprofils nicht oder anderweitig versteift ist.

Vorteilhaft ist jedoch, wenn ein sich zwischen Längsendbereichen des Tragprofils erstreckender mittlerer Abschnitt des Tragprofils durch das Versteifungsprofil oder ein Verstärkungsprofil verstärkt ist.

Weiterhin zweckmäßig ist es, wenn der Versteifungsabschnitt im Bereich der Halterung für die Anhängekupplung oder das Lastenträger-Kupplungsteil angeordnet ist.

Vorteilhaft ist vorgesehen, dass das Tragprofil im Bereich seiner durch die Verbindung mit einer weiteren Komponente der Trägeranordnung, insbesondere einem Seitenträger zur Verbindung mit dem Fahrzeug und/oder der Halterung für die Anhängekupplung oder das Lastenträger-Kupplungsteil und/oder einem weiteren Profilteil, durch das Versteifungsprofil versteift ist. So kann beispielsweise eine Kraftübertragung von einem durch ein erfindungsgemäßes Tragprofil gebildeten Querträger auf den Seitenträger verbessert sein, wenn das Tragprofil im Bereich des Seitenträgers durch das Versteifungsprofil versteift ist.

Hinsichtlich der Materialien ergeben sich zahlreiche Freiheitsgrade. So kann vorgesehen sein, dass das Tragprofil und das Versteifungsprofil aus demselben Material oder unterschiedlichen Materialien bestehen. Beispielsweise ist das Versteifungsprofil aus einem höherfesteren Material, beispielsweise einem höherfesteren Stahl, als das Tragprofil. Das Tragprofil oder das Versteifungsprofil oder beide können aus Metall, beispielsweise Stahl, Aluminium oder dergleichen, oder aus Kunststoff, zum Beispiel faserverstärktem Kunststoff oder dergleichen bestehen. Auch ein Materialmix dahingehend, dass beispielsweise das Tragprofil aus Metall besteht, während das Versteifungsprofil aus Kunststoff besteht (oder umgekehrt) oder dass für Tragprofil und Versteifungsprofil unterschiedliche Metalle oder unterschiedliche Stähle verwendet sind, ist ohne weiteres möglich. Es ist auch möglich, dass das Tragprofil und/oder das Versteifungsprofil aus Werkstoffverbünden oder Werkstoffkombinationen bestehen, zum Beispiel aus einer Verbindung von Kunststoff und Metall. Das Tragprofil und/oder das Versteifungsprofil können aber auch aus hybriden Werkstoffen und/oder Sandwich-Werkstoffen hergestellt sein. Diese hybriden Werkstoffe oder Sandwich-Werkstoffe können beispielsweise Kombinationen unterschiedlicher Metalle mit unterschiedlichen Metallschichten, Kombinationen aus Metall und Kunststoff oder dergleichen sein.

Zur Verbindung zwischen Tragprofil und Versteifungsprofil eignen sich verschiedene Verbindungstechniken, einzeln und in Kombination. So kann vorteilhaft vorgesehen sein, dass das Versteifungsprofil mit dem Tragprofil formschlüssig und/oder kraftschlüssig, insbesondere in einem Presssitz, und/oder stoffschlüssig, insbesondere durch eine Schweißverbindung und/oder eine Klebeverbindung und/oder eine Lötverbindung, verbunden ist. Als Schweißverbindung eignet sich beispielsweise eine Punktschweißung, eine Lochschweißung, eine Randschweißung oder dergleichen.

Eine formschlüssige Verbindung zwischen Tragprofil und Versteifungsprofil kann beispielsweise dadurch vorgesehen sein, dass das Versteifungsprofil oder das Tragprofil quer zur Längsachse verlaufende Vertiefungen, insbesondere Kerben oder Ausschnitte, aufweist, in die insbesondere durch Verformung hergestellte und quer zur Längsachse verlaufende Haltevorsprünge des jeweils anderen Profils, des Tragprofils oder des Versteifungsprofils, eingreifen. Die Vertiefungen sind vorzugsweise ebenso wie die Haltevorsprünge in einer Reihenanordnung nebeneinander angeordnet. Insbesondere vorteilhaft ist es, wenn derartige Vertiefungen an einem parallel zur Längsachse verlaufenden Längskantenbereich des jeweiligen Profils vorgesehen sind. Zwar ist es vorteilhaft, wenn mehrere derartige Vertiefungen und entsprechende Haltevorsprünge vorgesehen sind. Es versteht sich, dass auch nur eine einzige derartige Vertiefung und ein in diese eingreifender Haltevorsprung möglich sind. Die mindestens eine Vertiefung und der in diese eingreifender mindestens eine Haltevorsprung können beispielsweise eine runde Innenumfangskontur oder Außenumfangskontur aufweisen. Es ist aber auch möglich, dass der Haltevorsprung und die Vertiefung polygonale, zum Beispiel rechteckige oder dreieckige, Außenumfangskonturen bzw. Innenumfangskonturen aufweisen.

Das Versteifungsprofil und das Tragprofil können zunächst aneinander angeordnet werden, bevor eine Umformung stattfindet. So kann vorgesehen sein, dass das Versteifungsprofil mit dem Tragprofil anhand einer Umformung mindestens eines der Profile formschlüssig miteinander verbunden sind, die im aneinander angeordneten Zustand der Profile durchgeführt ist. Beispielsweise ist es möglich, dass das äußere Profil in Richtung des inneren Profils umgeformt wird, zum Beispiel eine Art Einprägung oder Einbuchtung oder Beule erhält, die dann am inneren Profil anliegt oder in dieses eindringt. Die Umformung ist vorzugsweise an einer Seitenwand, abseits eines Kantenbereichs des jeweiligen Profils, vorgesehen.

Zweckmäßig ist es, wenn das Versteifungsprofil mit dem Tragprofil anhand einer Innenhochdruckumformung, insbesondere einer Hydroformung, und/oder einer Krümmungsverformung verbunden ist. Bei der Krümmungsverformung werden die aneinander angeordneten Profile gemeinsam verformt, sodass die Profile eine Bogenform oder jeweils zwei zueinander winkelige Schenkel aufweisen. Beispielsweise wird das Tragprofil auf diese Weise an eine Außenumfangskontur des Fahrzeugs angepasst. So können beispielsweise durch eine derartige Krümmungsverformung von einem Querträger-Abschnitt des Tragprofils winkelig abstehende Seitenträger-Abschnitte zur Montage an dem Fahrzeug ausgebildet werden.

Zwischen dem Versteifungsprofil und dem Tragprofil können Zwischenräume vorgesehen sein. Ein derartiger Zwischenraum kann ein Hohlraum sein. Vorteilhaft ist es, wenn mindestens ein Zwischenraum zwischen dem Versteifungsprofil und dem Tragprofil und/oder mindestens ein Innenraum des Versteifungsprofils oder des Tragprofils mit einem schaumartigen Material und/oder elastischen Material gefüllt ist. Das schaumartige Material oder elastische Material kann beispielsweise bei einer Stoßbelastung, insbesondere einem Unfall, eine dämpfende Wirkung haben. Auch zur Vermeidung von Schwingungen, unangenehmen Geräuschen oder dergleichen, eignet sich eine derartige Verfüllung des Zwischenraums. Das Schaummaterial kann einen offenporigen oder geschlossen-porigen Schaum umfassen.

An sich ist es ausreichend, wenn das Tragprofil und das Versteifungsprofil anhand ihrer Profilausgestaltung, einer formschlüssigen oder kraftschlüssigen oder stoffschlüssigen Verbindung oder dergleichen, quer zur Längsachse des Tragprofils aneinandergehalten sind. Es ist aber auch möglich, dass das Tragprofil und das Versteifungsprofil anhand mindestens eines von dem Tragprofil und Versteifungsprofil separaten Haltekörpers aneinandergehalten sind. Der Haltekörper kann beispielsweise im Falle einer Stoßbelastung oder eines Crashs eine zusätzliche Abstützung des Versteifungsprofils am Tragprofil bereitstellen, beispielsweise eine Verformung des Versteifungsprofils vom Tragprofil weg verhindern oder vermeiden.

Es kann vorgesehen sein, dass der Haltekörper mit der Halterung für die Anhängekupplung oder das Lastenträger-Kupplungsteil verbunden ist oder durch die Halterung gebildet ist. Die Halterung kann also dazu beitragen, dass das Versteifungsprofil am Tragprofil fixiert ist.

Der Haltekörper kann beispielsweise plattenartig sein. Bevorzugt ist eine Art Gehäusekonzept. Der Haltekörper kann die Anordnung von Tragprofil und Versteifungsprofil in dem Versteifungsabschnitt zumindest partiell einhausen oder ein Gehäuse bilden.

Weiterhin ist es möglich, dass der Haltekörper eine Klammer umfasst, der Teilabschnitte mindestens eines von Tragprofil oder Versteifungsprofil miteinander verklammert. Die Halteklammer kann Schenkel des Tragprofils miteinander verklammern und dabei gleichzeitig das Versteifungsprofil bezüglich des Tragprofils fixieren. Es ist möglich, dass Klammerschenkel der Halteklammer quer zur Längsachse des Tragprofils oder eines Tragprofil-Abschnitts verlaufen, insbesondere in das Tragprofil oder das Versteifungsprofil eingreifen. Die Klammerschenkel der Klammer können beispielsweise von einer Außenseite des Tragprofils her in den Innenraum des Tragprofils eindringen und das dort befindliche Versteifungsprofil bezüglich des Tragprofils fixieren.

Zur formschlüssigen Fixierung des Versteifungsprofils am Tragprofil eignen sich beispielsweise Steckvorsprünge und Steckaufnahmen. Vorzugsweise ist vorgesehen, dass das Tragprofil und das Versteifungsprofil durch mindestens eine Paarung aus einer Steckaufnahme und einem Steckvorsprung formschlüssig miteinander verbunden sind. Der Steckvorsprung greift in die mindestens eine Steckaufnahme ein. Die Steckachse zum Ineinanderstecken von Steckvorsprung und Steckaufnahme verläuft vorzugsweise quer, insbesondere rechtwinkelig quer, zu der Längsachse des Tragprofils oder des Versteifungsprofils. So ist z.B. vorgesehen, dass das Tragprofil mindestens eine Steckaufnahme aufweist, in die ein Steckvorsprung des Versteifungsprofils eingreift. Es ist aber auch möglich, dass der Steckvorsprung am Tragprofil angeordnet ist und in die am Versteifungsprofil angeordnete Steckaufnahme eingreift. Ferner können das Versteifungsprofil und das Tragprofil Steckvorsprünge und Steckaufnahmen aufweisen.

Der Steckvorsprung kann ohne weitere Verbindungsmaßnahme lediglich formschlüssig in die Steckaufnahme eingesteckt sein. Bevorzugt ist jedoch, wenn der in der Steckaufnahme angeordnete Steckvorsprung stoffschlüssig mit dem Tragprofil verbunden, insbesondere verschweißt, ist. Beispielsweise kann der Steckvorsprung vor die Steckaufnahme vorstehen oder bezüglich der Steckaufnahme bündig oder unterbündig sein und in oder neben der Steckaufnahme durch eine Schweißnaht stoffschlüssig gehalten sein. Aber auch eine Verklebung des Steckvorsprungs in der Steckaufnahme ist möglich. Es ist auch möglich, dass der Steckvorsprung in der Steckaufnahme verprägt oder verpresst ist und/oder dass ein vor die Steckaufnahme vorstehender Abschnitt des Steckvorsprungs quer zu einer Steckachse, entlang derer der Steckvorsprung in die Steckaufnahme eingesteckt wird, umgeformt ist.

Es ist möglich, dass das Versteifungsprofil an dem Tragprofil lediglich anhand einer oder mehrerer Paarungen von Steckvorsprung und Steckaufnahme abgestützt ist, insbesondere dann, wenn zusätzlich noch eine stoffschlüssige Verbindung realisiert ist. Bevorzugt ist jedoch, wenn sich das Versteifungsprofil an dem Tragprofil, insbesondere an einer den Innenraum des Tragprofils zugewandten Innenseite der Umfangswand, neben dem Steckvorsprung abstützt. Die Paarung aus Steckvorsprung und Steckaufnahme kann beispielsweise eine Fixierung von Tragprofil und Versteifungsprofil bezüglich der Längsachse des Tragprofils realisieren, während die Abstützung neben der Paarung aus Steckvorsprung und Steckaufnahme beispielsweise bei einer Stoßbelastung, einem Unfall oder dergleichen, besonders belastbar ist.

Bevorzugt ist vorgesehen, dass das Versteifungsprofil oder das Tragprofil eine Reihenanordnung in einer insbesondere geradlinigen Reihenlinie nebeneinander angeordneter Steckvorsprünge aufweisen, die in eine entlang der Reihenlinie verlaufende, langgestreckte Steckaufnahme oder in in einer Reihenanordnung entlang der Reihenlinie angeordneten Steckaufnahmen eingreifen, wobei die Steckaufnahme oder die Steckaufnahmen am jeweils anderen von Versteifungsprofil und Tragprofil angeordnet sind. Die Reihenlinie verläuft beispielsweise parallel zur Längsachse des Tragprofils oder des Versteifungsprofils. Beispielsweise sind die Steckvorsprünge an dem Versteifungsprofil angeordnet, insbesondere einer Stirnseite eines Seitenschenkels des Versteifungsprofils, während die Steckaufnahme oder die Steckaufnahmen am Tragprofil angeordnet sind. Es ist aber auch umgekehrt möglich, dass das Versteifungsprofil Steckaufnahmen oder eine Steckaufnahme aufweist, in die Steckvorsprünge, die in einer Reihenanordnung am Tragprofil angeordnet sind, eingreifen. Selbstverständlich ist eine stoffschlüssige Verbindung der Steckvorsprünge mit der Steckaufnahme oder den Steckaufnahmen möglich.

Eine Abstützung der Profile aneinander zwischen den Steckvorsprüngen ist vorteilhaft. Zweckmäßig ist vorgesehen, dass sich das Versteifungsprofil zwischen den Steckvorsprüngen an dem Tragprofil, insbesondere an einer den Innenraum des Tragprofils zugewandten Innenseite der Umfangswand, abstützt.

Ein vorteilhaftes Konzept sieht vor, dass mindestens eine Stirnseite des Versteifungsprofils bezüglich der Längsachse des Tragprofils einen Schrägverlauf und/oder eine Krümmung zur Verringerung einer Kerbspannung zwischen dem Tragprofil und dem Versteifungsprofil aufweist. So kann beispielsweise eine Ausrundung, eine schräg, jedoch geradlinig verlaufende Stirnseite des Versteifungsprofils vorgesehen sein. Im Bereich der Stirnseite ist das Versteifungsprofil mit dem Tragprofil vorzugsweise stoffschlüssig, beispielsweise verschweißt, verlötet oder verklebt, und/oder formschlüssig verbunden.

Bezüglich der Längsachse des Tragprofils kann das Versteifungsprofil vor einen Grundkörper des Versteifungsprofils vorstehende Abschnitte aufweisen. Derartige vorstehende Abschnitte sind insbesondere an einem Kantenbereich des Versteifungsprofils vorgesehen. Von den vorstehenden Abständen des Versteifungsprofils verläuft eine Stirnseite des Versteifungsprofils bezüglich der Längsachse des Tragprofils zum Grundkörper des Versteifungsprofils insbesondere schräg oder gekrümmt. Diese Maßnahme trägt dazu bei, eine Kerbspannung zwischen Tragprofil und Versteifungsprofil zu verringern oder zu vermeiden.

Das Versteifungsprofil sorgt beispielsweise bei einer unfallbedingten Belastung oder Stoßbelastung für eine höhere Belastbarkeit des Tragprofils. Besonders in diesem Zusammenhang ist die nachfolgende Maßnahme vorteilhaft, bei der vorgesehen ist, dass das Versteifungsprofil und das Tragprofil an zumindest einem Bereich einen Abstand zueinander aufweisen, der bei einer Verformung des Versteifungsprofils und/oder des Tragprofils bei einer insbesondere unfallbedingten Stoßbelastung verkleinert wird. Der Abstand kann ein Hohlraum sein, in dem sich beispielsweise Luft befindet. In dem Abstand kann aber auch ein nachgiebiges Füllmaterial, beispielsweise Schaumstoff, ein elastisches Material, Gummi oder dergleichen, vorgesehen sein.

Das Versteifungsprofil kann aber auch sozusagen als ein aktives Crashelement ausgestaltet oder vorgesehen sein. Eine vorteilhafte Maßnahme sieht vor, dass das Versteifungsprofil sich bei einer insbesondere unfallbedingten Stoßbelastung im Sinne eines Verkeilens an dem Tragprofil abstützt. So kann das Versteifungsprofil beispielsweise Schenkel oder Seitenwandabschnitte aufweisen, die bei durch eine Druckbelastung oder Stoßbelastung sozusagen voneinander weg bewegt werden und sich dadurch erst an dem Tragprofil abstützen oder in verstärktem Maße an dem Tragprofil abstützen.

Das Tragprofil und/oder das Versteifungsprofil weisen eine lang gestreckte Gestalt auf. Eine jeweilige Länge des Tragprofils oder Versteifungsprofils ist dabei mindestens doppelt so groß, vorzugsweise mindestens dreimal, viermal, fünfmal, achtmal oder zehnmal so groß, wie der jeweilige Durchmesser des Tragprofils oder des Versteifungsprofils.

Das Versteifungsprofil ist vorzugsweise an einer im am Fahrzeug montierten Zustand des Tragprofils vom Heck des Fahrzeugs abgewandten Seite, insbesondere einem dort vorgesehenen Umfangswandabschnitt, des Tragprofils angeordnet. Insbesondere gilt dies für einen Grundschenkel oder eine Grundwand des Versteifungsprofils. Seitenschenkel des Versteifungsprofils, die vom Grundschenkel oder von der Grundwand abstehen, stehen zweckmäßigerweise in Richtung des Hecks des Fahrzeugs vor. Vorteilhaft ist ferner, wenn eine Grundwand oder ein Grundschenkel des Tragprofils in Gebrauchslage vertikal oder im Wesentlichen vertikal orientiert ist.

Das Versteifungsprofil bildet eine an sich selbstständige Versteifungsstruktur, d. h. es ist vorteilhaft, wenn es nicht zur Verbindung zweier Teilabschnitte, beispielsweise zueinander winkeliger oder in einer Längsrichtung hintereinander angeordneter Teilabschnitte, des Tragprofils dient. Weiterhin ist es vorteilhaft, wenn das Versteifungsprofil nicht zur Verbindung eines Querträgers mit einem Seitenträger der Trägeranordnung vorgesehen oder angeordnet ist.

Erfindungsgemäß ist vorgesehen, dass das Versteifungsprofil nur oder ausschließlich zum Zwecke der Versteifung des Tragprofils dient.

Bevorzugt ist es, wenn das Versteifungsprofil nicht vor eine in Gebrauchslage obere Seite und/oder nicht vor eine in Gebrauchslage untere Seite des Tragprofils vorsteht.

Die Trägeranordnung kann einen Bestandteil eines Traggestells eines Lastenträgers bilden.

Bevorzugt ist jedoch eine Anwendung der Trägeranordnung als eine Tragkonstruktion für eine Kupplungseinrichtung. Bevorzugt ist bei der Trägeranordnung vorgesehen, dass sie einen sich in Gebrauchslage quer zu einer Fahrzeuglängsrichtung oder Fahrzeuglängsachse des Fahrzeugs erstreckenden Querträger aufweist, dessen Längsendbereiche an zur Verbindung mit dem Fahrzeug vorgesehenen Seitenträgern der Trägeranordnung gehalten sind. Die Seitenträger können beispielsweise Haltekonsolen zur Befestigung an Längsträgern des Fahrzeugs sein. Die Seitenträger können aber auch langgestreckte Seitenträger sein, die sich in Längsrichtung des Fahrzeugs erstreckenden, beispielsweise seitlich an der Karosserie des Kraftfahrzeugs befestigt oder befestigbar sind.

Der Querträger und/oder die Seitenträger können sozusagen konventionelle Bauteile sein, zum Beispiel nicht durch ein Versteifungsprofil verstärkte Tragprofile aufweisen. Bevorzugt ist jedoch, wenn der Querträger und/oder die Seitenträger das durch das Versteifungsprofil verstärkte Tragprofil aufweisen oder dadurch gebildet sind. Dabei ist es möglich, dass nur der Querträger ein derartiges Versteifungsprofil aufweist, während die Seitenträger nicht versteift sind.

Besonders günstig kann ein Versteifungsprofil in einem Verbindungsbereich oder Übergangsbereich zwischen dem Querträger und einem oder beiden der Seitenträger zum Einsatz kommen. Der Verbindungsbereich kann gebogen oder gekrümmt oder über Eck vorgesehen sein. Es ist aber auch möglich, dass der Querträger in dem Verbindungsbereich einen insbesondere entlang seiner Längsachse geradlinigen Verlauf aufweist.

Vorteilhaft steht das Tragprofil vor einander entgegengesetzte Längsenden des Versteifungsprofils vor.

Erfindungsgemäß dient das Versteifungsprofil ausschließlich zur Versteifung des Tragprofils. Zweckmäßigerweise hat das Versteifungsprofil keine Verbindungsfunktion des Tragprofils mit einer anderen Komponente.

Das Versteifungsprofil ist vorteilhaft ein von einem zur Verbindung der Trägeranordnung mit dem Fahrzeug vorgesehenen Bauteil, insbesondere einem Seitenträger, separates Bauteil. Ferner ist es vorteilhaft, wenn das Versteifungsprofil ein von der Halterung für eine Anhängekupplung oder einen Lastenträger-Kupplungsteil separates Bauteil ist.

Die Anhängekupplung umfasst beispielsweise einen Kupplungsarm, an dessen freien, von der Halterung abgewandten Endbereich ein Kuppelstück, insbesondere eine Kupplungskugel angeordnet ist. Die Halterung kann beispielsweise eine Steckaufnahme für die Anhängekupplung oder das Lastenträger-Kupplungsteil aufweisen.

Es ist möglich, dass die Anhängekupplung oder das Lastenträger-Kupplungsteil unlösbar fest oder unverlierbar, jedoch beweglich an der Halterung gelagert ist, beispielsweise schwenkbeweglich und/oder schiebebeweglich. So kann die Anhängekupplung, beispielsweise deren Kupplungsarm, zwischen einer Gebrauchsstellung, die zum Anhängen des Anhängers oder zum Aufsetzen eines Lastenträgers, und einer Nichtgebrauchsstellung durch die Halterung beweglich bezüglich des Fahrzeugs gelagert sein. In der Gebrauchsstellung steht die Anhängekupplung oder das Lastenträger-Kupplungsteil vor das Heck, beispielsweise einen Stoßfänger, des Fahrzeugs in Fahrtrichtung gesehen nach hinten vor, und ist in der Nichtgebrauchstellung her zu dem Heck hin verstellt, beispielsweise hinter einem Stoßfänger des Fahrzeugs verborgen.

Nachfolgend werden Ausführungsbeispiele der Erfindung anhand der Zeichnung erläutert. Es zeigen:
- Figur 1: eine perspektivische Schrägansicht einer eine Anhängekupplung tragenden Trägeranordnung mit einem ein Tragprofil außen stützenden Versteifungsprofil,
- Figur 2: ein Detail D1 aus Figur 1,
- Figur 3: eine perspektivische Schrägansicht einer Trägeranordnung mit durch Versteifungsprofile versteiften Eckbereichen,
- Figur 4: eine Draufsicht auf die Versteifungsprofile der Trägeranordnung gemäß Figur 3,
- Figur 5: eine Querschnittsdarstellung der Trägeranordnung gemäß Figur 3, etwa entlang einer Schnittlinie A-A in Figur 3,

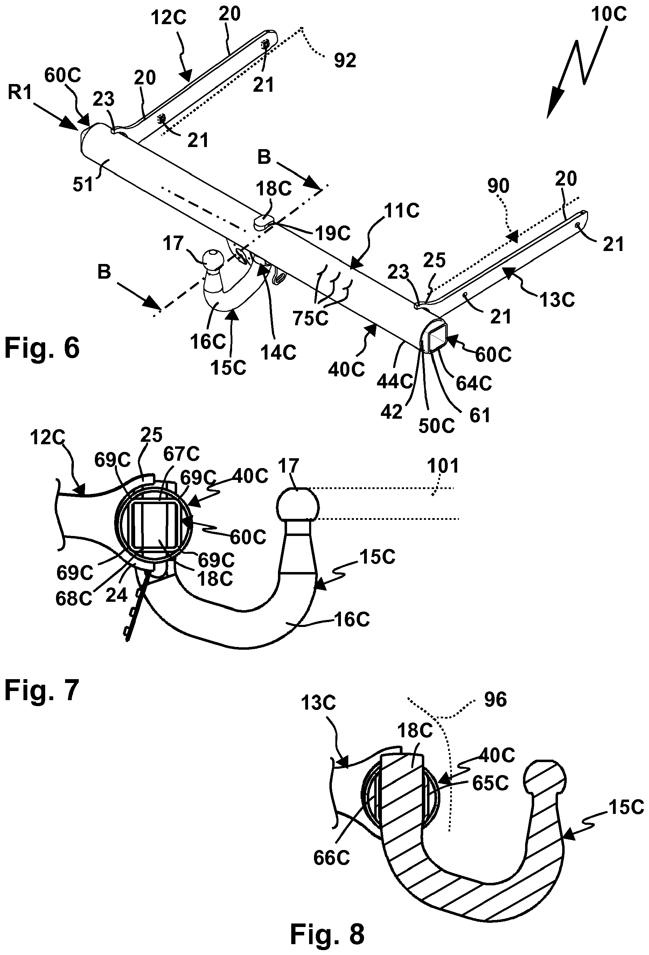

- Figur 6: eine perspektivische Schrägansicht einer Trägeranordnung einer Anhängekupplung mit einem im Querschnitt runden Tragprofil, in welchem ein rechteckiges Versteifungsprofil aufgenommen ist,
- Figur 7: eine Seitenansicht auf einen vorderen Teil der Trägeranordnung gemäß Figur 6, etwa in einer Blickrichtung R1,
- Figur 8: einen Querschnitt durch die Trägeranordnung gemäß Figur 6, etwa entlang einer Schnittlinie B-B,

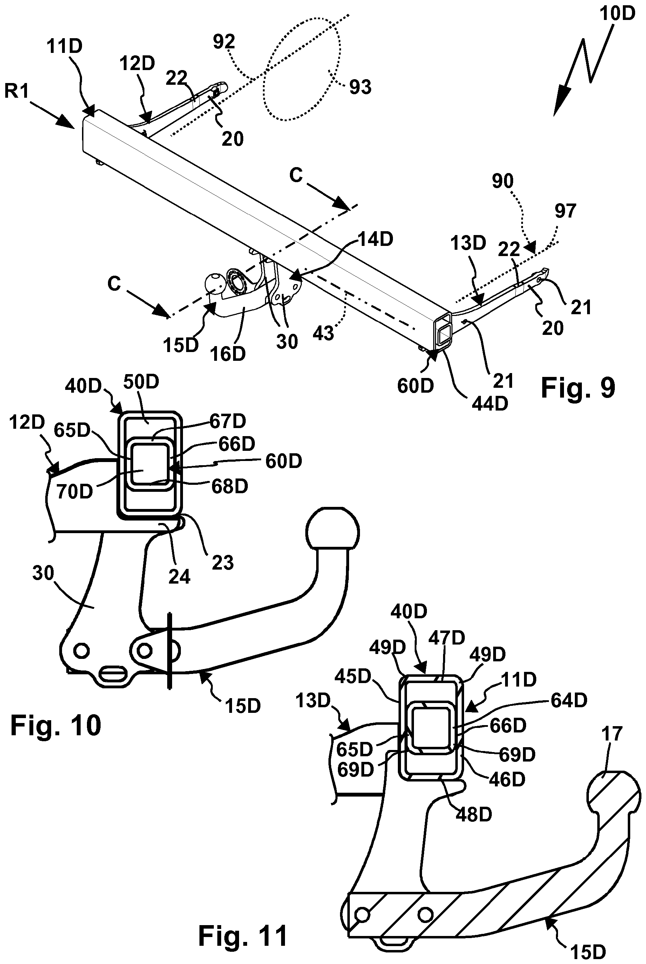

- Figur 9: eine perspektivische Schrägansicht einer Trägeranordnung einer Anhängekupplung mit einem im Querschnitt rechteckigen Tragprofil, in welchem ein weiteres, im Querschnitt rechteckiges Tragprofil aufgenommen ist,
- Figur 10: eine Seitenansicht eines vorderen Teils der Trägeranordnung gemäß Figur 9, etwa in einer Blickrichtung R1,
- Figur 11: einen Querschnitt durch die Trägeranordnung gemäß Figur 9, etwa entlang einer Schnittlinie C-C,

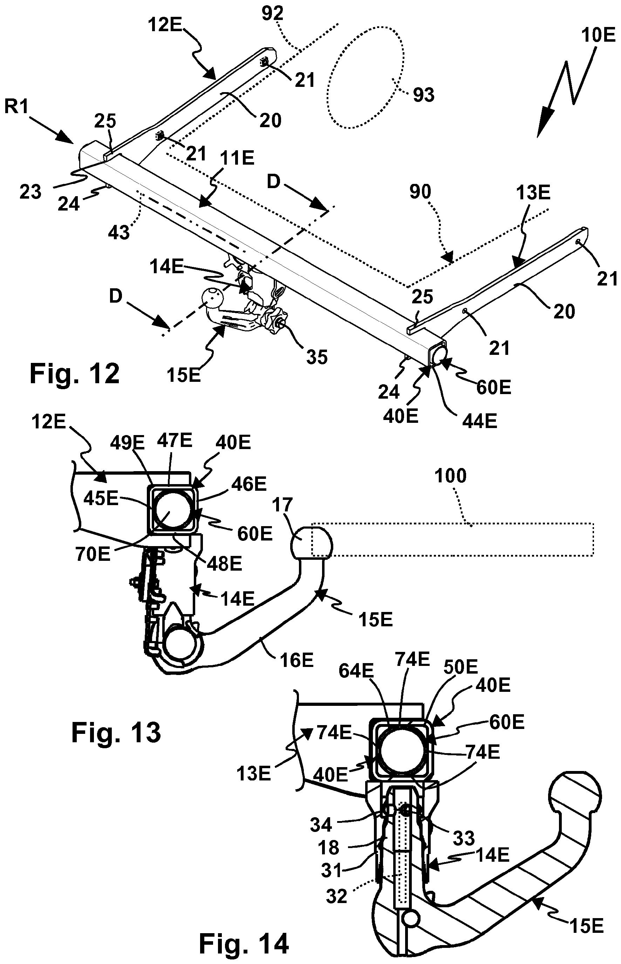

- Figur 12: eine perspektivische Schrägansicht einer Trägeranordnung einer Anhängekupplung mit einem im Querschnitt rechteckigen Tragprofil, in welchem ein weiteres, im Querschnitt rundes Tragprofil aufgenommen ist,
- Figur 13: eine Seitenansicht eines vorderen Teils der Trägeranordnung gemäß Figur 12, etwa in einer Blickrichtung R1,
- Figur 14: einen Querschnitt durch die Trägeranordnung gemäß Figur 12, etwa entlang einer Schnittlinie D-D,
- Figur 15: eine perspektivische Schrägansicht einer Trägeranordnung einer Anhängekupplung mit einem Tragprofil, in welchem ein im Querschnitt dachkantartiges Versteifungsprofil aufgenommen ist,
- Figur 16: eine Seitenansicht auf einen vorderen Teil der Trägeranordnung gemäß Figur 15, etwa in einer Blickrichtung R1,
- Figur 17: einen Querschnitt durch die Trägeranordnung gemäß Figur 15, etwa entlang einer Schnittlinie E-E,
- Figur 18: einen Längsschnitt durch die Trägeranordnung gemäß Figur 15, etwa entlang einer Schnittlinie F-F,

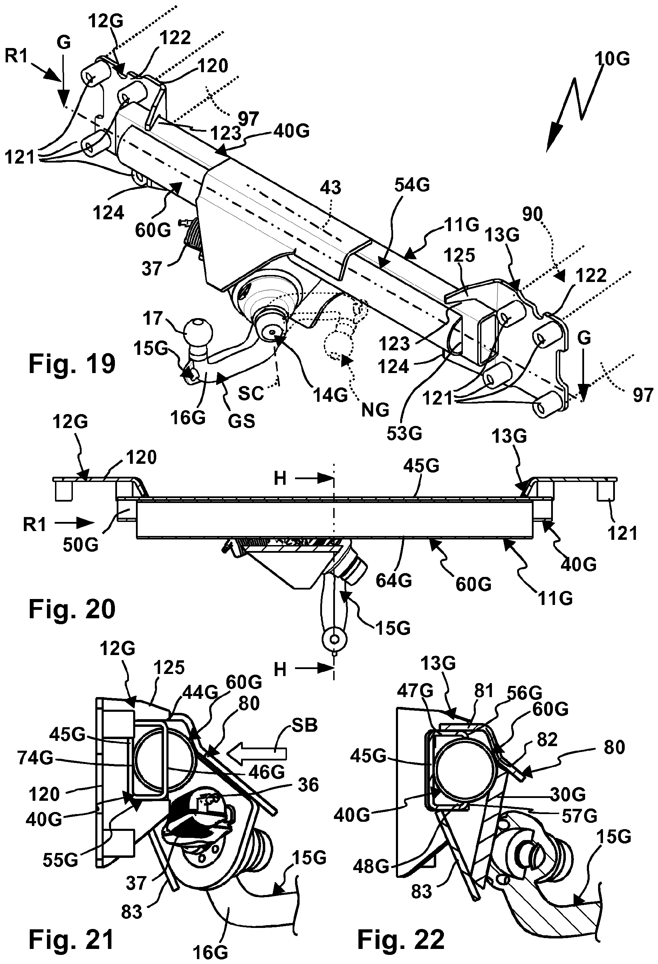

- Figur 19: eine perspektivische Schrägansicht einer Trägeranordnung einer Anhängekupplung mit einem Tragprofil, in welchem ein im Querschnitt rundes Versteifungsprofil zum Teil aufgenommen ist,
- Figur 20: einen mittleren Längsschnitt durch die Trägeranordnung gemäß Figur 19, etwa entlang einer Schnittlinie G-G,
- Figur 21: eine Seitenansicht auf einen vorderen Teil der Trägeranordnung gemäß Figur 19, etwa aus einer Blickrichtung R1,
- Figur 22: einen Querschnitt durch die Trägeranordnung gemäß Figuren 19, 20, etwa entlang einer Schnittlinie H-H in Figur 20,

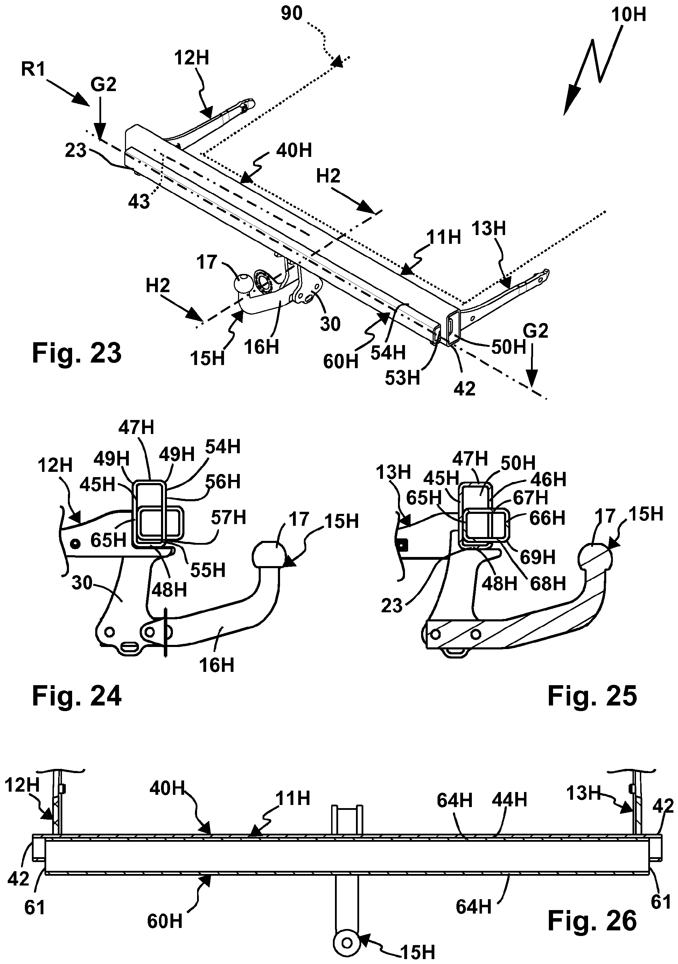

- Figur 23: eine perspektivische Schrägansicht auf eine Trägeranordnung mit einer Anhängekupplung, bei der ein im Querschnitt rechteckiges Tragprofil ein im Querschnitt rechteckiges Versteifungsprofil teilweise aufnimmt,
- Figur 24: eine Seitenansicht auf einen vorderen Teil der Trägeranordnung gemäß Figur 23, etwa entlang aus einer Blickrichtung R1 in Figur 23,
- Figur 25: einen Querschnitt durch die Trägeranordnung gemäß Figur 23, etwa entlang einer Schnittlinie H2-H2,
- Figur 26: einen Längsschnitt durch die Trägeranordnung gemäß Figur 23, etwa entlang einer Schnittlinie G2-G2 in Figur 23,
- Figur 27: eine perspektivische Schrägansicht auf eine Anhängekupplung mit einem schwenkbaren Kupplungsarm, deren Trägeranordnung ein im Querschnitt rechteckiges Tragprofil aufweist, welches von einem im Querschnitt rechteckigen Versteifungsprofil kreuzförmig durchsetzt ist,
- Figur 28: eine Teil-Seitenansicht auf die Trägeranordnung gemäß Figur 27 etwa aus einer Blickrichtung R1,
- Figur 29: eine Teil-Schnittansicht durch die Trägeranordnung gemäß Figur 27, etwa entlang einer Schnittlinie I-I,
- Figur 30: einen Längsschnitt durch die Trägeranordnung gemäß Figur 27, etwa entlang einer Schnittlinie J-J,

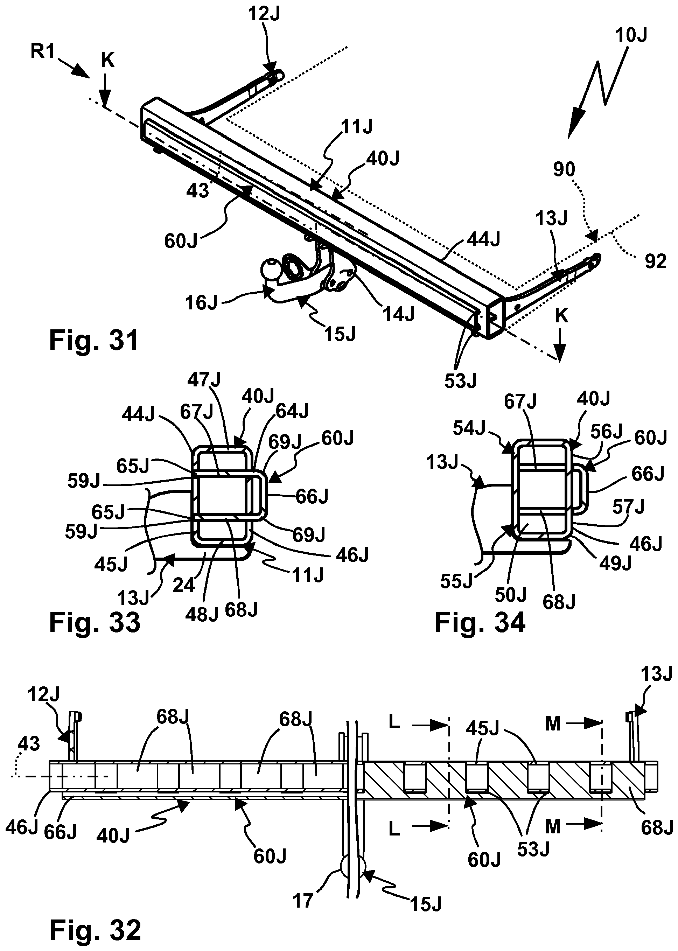

- Figur 31: eine perspektivische Schrägansicht einer Trägeranordnung mit Anhängekupplung, deren im Querschnitt rechteckiges Tragprofil durch ein U-förmiges Versteifungsprofil verstärkt ist,
- Figur 32: einen Längsschnitt durch die Trägeranordnung gemäß Figur 31, etwa entlang einer in der Längsmitte der Trägeranordnung gestuften Schnittlinie K-K,
- Figur 33: einen Querschnitt durch die Trägeranordnung gemäß Figur 31, etwa entlang einer Schnittlinie L-L in Figur 32,
- Figur 34: einen Querschnitt durch die Trägeranordnung gemäß Figur 31, etwa entlang einer Schnittlinie M-M in Figur 32,

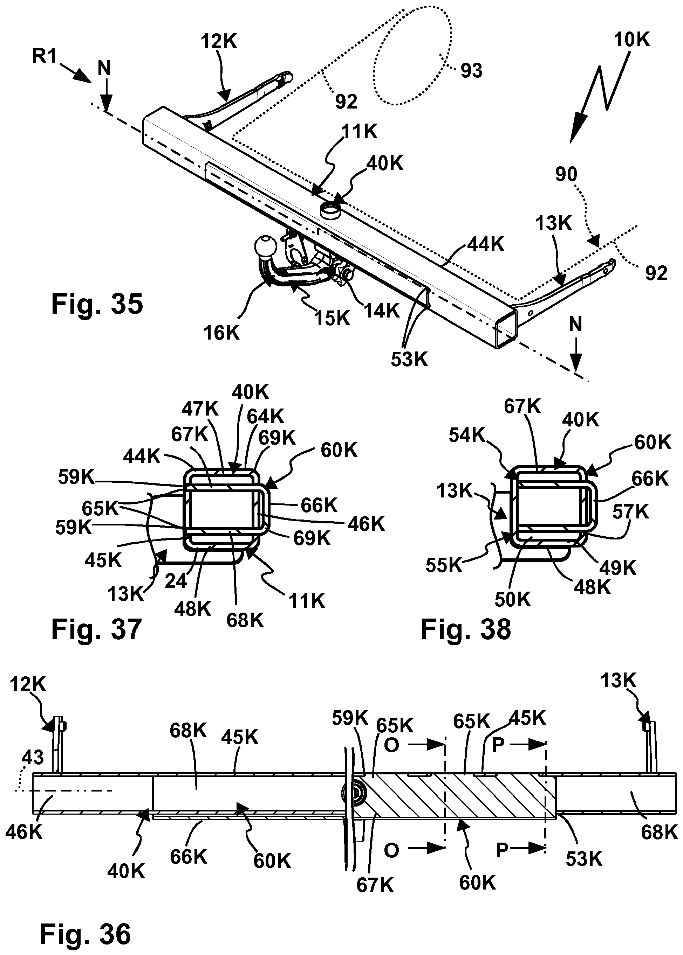

- Figur 35: eine perspektivische Schrägansicht einer Trägeranordnung mit Anhängekupplung, deren im Querschnitt rechteckiges Tragprofil durch ein U-förmiges Versteifungsprofil verstärkt ist,
- Figur 36: einen Längsschnitt durch die Trägeranordnung gemäß Figur 35, etwa entlang einer in der Längsmitte der Trägeranordnung gestuften Schnittlinie N-N,
- Figur 37: einen Querschnitt durch die Trägeranordnung gemäß Figur 35, etwa entlang einer Schnittlinie O-O in Figur 36,
- Figur 38: einen Querschnitt durch die Trägeranordnung gemäß Figur 35, etwa entlang einer Schnittlinie P-P in Figur 36,

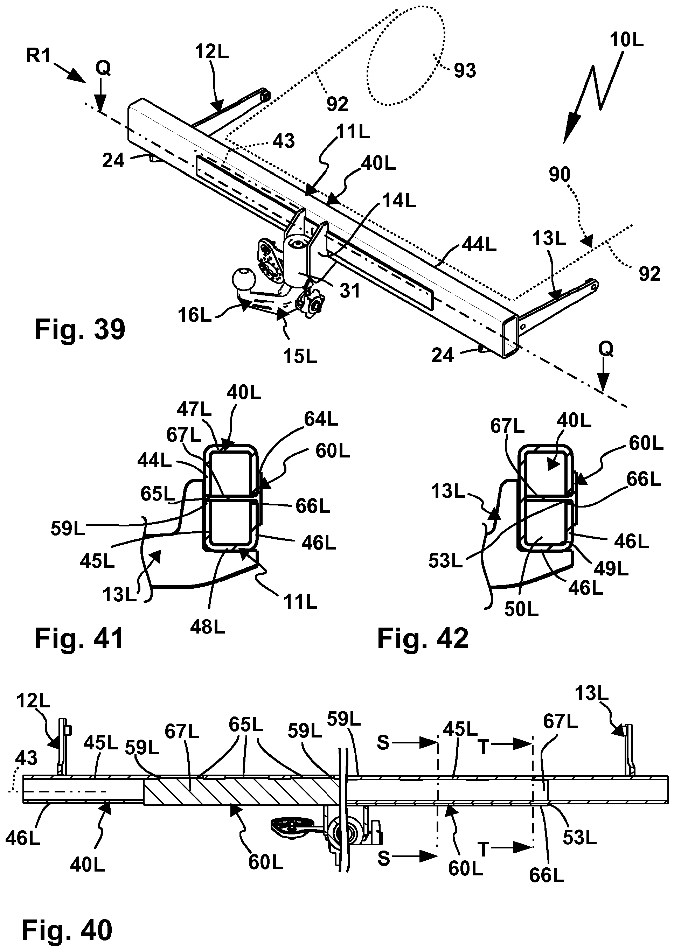

- Figur 39: eine perspektivische Schrägansicht einer Trägeranordnung mit Anhängekupplung, deren im Querschnitt rechteckiges Tragprofil durch ein T-förmiges Versteifungsprofil verstärkt ist,
- Figur 40: einen Längsschnitt durch die Trägeranordnung gemäß Figur 39, etwa entlang einer in der Längsmitte der Trägeranordnung gestuften Schnittlinie Q-Q,
- Figur 41: einen Querschnitt durch die Trägeranordnung gemäß Figur 39, etwa entlang einer Schnittlinie S-S in Figur 40,
- Figur 42: einen Querschnitt durch die Trägeranordnung gemäß Figur 39, etwa entlang einer Schnittlinie T-T in Figur 40,
- Figur 43: eine perspektivische Schrägansicht einer Trägeranordnung mit Anhängekupplung, deren im Querschnitt rechteckiges Tragprofil durch ein L-förmiges Versteifungsprofil verstärkt ist,
- Figur 44: einen Längsschnitt durch die Trägeranordnung gemäß Figur 43, etwa entlang einer in der Längsmitte der Trägeranordnung gestuften Schnittlinie U-U,
- Figur 45: einen Querschnitt durch die Trägeranordnung gemäß Figur 43, etwa entlang einer Schnittlinie V-V in Figur 44,
- Figur 46: einen Querschnitt durch die Trägeranordnung gemäß Figur 43, etwa entlang einer Schnittlinie W-W in Figur 44,

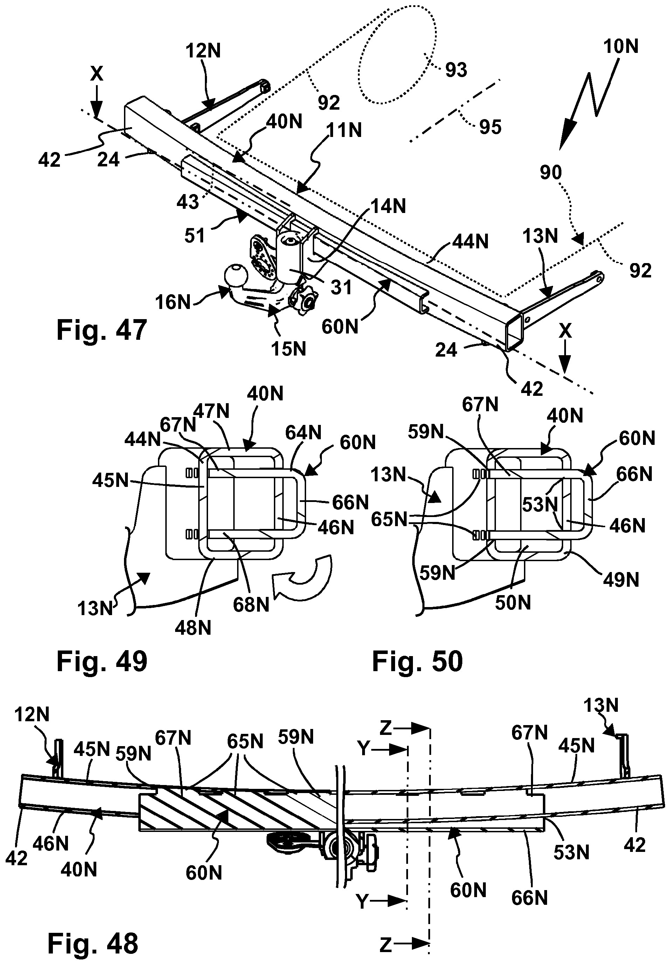

- Figur 47: eine perspektivische Schrägansicht einer Trägeranordnung mit Anhängekupplung, deren im Querschnitt rechteckiges Tragprofil durch ein U-förmiges Versteifungsprofil verstärkt ist,
- Figur 48: einen Längsschnitt durch die Trägeranordnung gemäß Figur 47, etwa entlang einer in der Längsmitte der Trägeranordnung gestuften Schnittlinie X-X,
- Figur 49: einen Querschnitt durch die Trägeranordnung gemäß Figur 47, etwa entlang einer Schnittlinie Y-Y in Figur 48,
- Figur 50: einen Querschnitt durch die Trägeranordnung gemäß Figur 47, etwa entlang einer Schnittlinie Z-Z in Figur 48, und
- Figur 51: eine perspektivische Schrägansicht eines Lastenträgers von schräg unten, wobei der Lastenträger ein Traggestell aufweist, welches ein Tragprofil mit Versteifungsprofil aufweist.

In der Zeichnung sind Trägeranordnungen 10A, 10B, 10C, 10D, 10E, 10F, 10G, 10H, 101, 10J, 10K, 10L, 10M und 10N dargestellt, die teilweise gleiche oder identische Komponenten aufweisen. Sofern diese Komponenten identisch sind, tragen sie das gleiche Bezugszeichen. In der nachfolgenden Beschreibung, wird in der Regel die gleiche Bezugsnummer verwendet, jedoch mit dem Zusatz eines Großbuchstabens A-N entsprechend der jeweiligen Trägeranordnung 10A-10N.

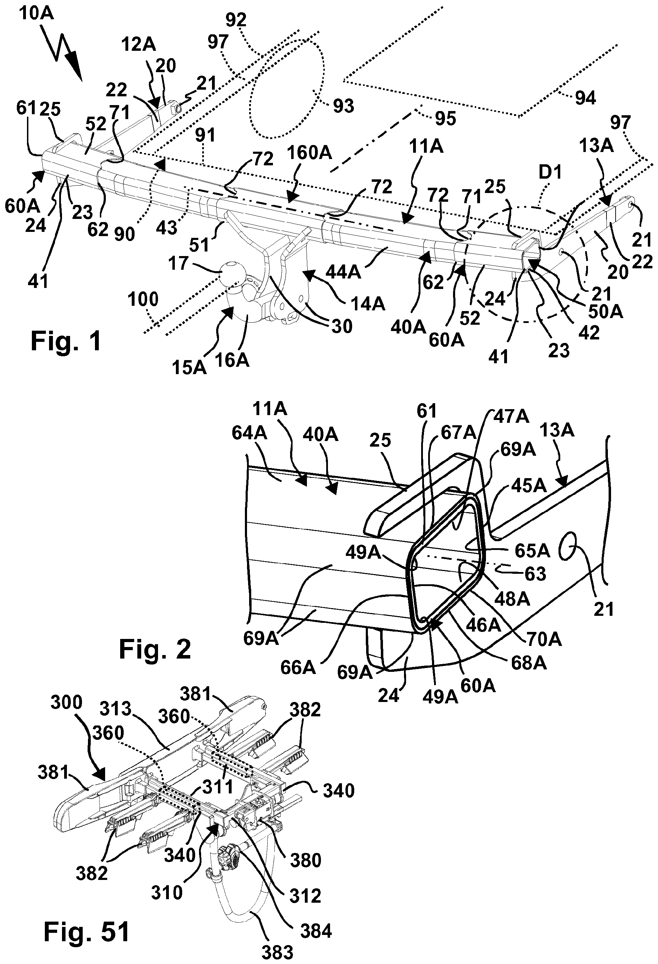

Die Trägeranordnungen 10A-10N sind zur Anordnung an einem Heck eines Fahrzeugs 90 vorgesehen, beispielsweise eines Personenkraftwagens, eines Transporters oder dergleichen. Das Fahrzeug 90 ist vorzugsweise ein Elektrofahrzeug oder ein zumindest teilweise elektrisch betreibbares Hybrid-Fahrzeug. Eine Karosserie 92 des Fahrzeugs 90 weist einen hinteren Bereich bzw. ein Heck 91 auf. Von Rädern 93 ist exemplarisch beispielsweise in Figur 1 lediglich ein Hinterrad dargestellt. Bevorzugt hat das Fahrzeug 90 zwei hintere Räder 93 sowie nicht dargestellte vordere Räder 93. Zwischen den vorderen und hinteren Rädern 93 befindet sich vorteilhaft ein Energiespeicher 94, beispielsweise eine Anordnung von Batteriezellen, die es zu schützen gilt. Wenn ein Aufprall auf das Heck 91 des Fahrzeugs 90 erfolgt, sind die Batterien oder der Energiespeicher 94 vor Beschädigungen zu schützen. Insbesondere sollte sich das Heck 91 der Karosserie 92 nur bis zu einem vorbestimmten Maß verformen können, so dass der Energiespeicher 94 nicht beschädigt wird. Insbesondere kritisch ist es, dass elektrische Anschlüsse eines Energiespeichers, beispielsweise des Energiespeichers 94, häufig in einem hinteren Bereich des jeweiligen Fahrzeugs angeordnet sind, also nahe beim Heck 91. Im Falle eines Heckaufpralls kann dies zu einem Kurzschluss der Anschlüsse führen, so dass der Energiespeicher 94 im Extremfall zu brennen beginnt. Auch mechanische Anschlüsse des Energiespeichers an das Kraftfahrzeug und/oder die mechanischen Komponenten der elektrischen Anschlüsse sind empfindlich und zu schützen. Zur Vermeidung einer derartigen Gefahrensituation sind die Trägeranordnungen 10A-10N besonders solide ausgeführt, was nachfolgend deutlich wird.

Die Trägeranordnungen 10A-10N weisen einzeln als Querträger 11A-11N bezeichnete Querträger 11 auf, die sich quer zu einer Fahrzeuglängsachse 95 des Fahrzeugs 90 erstrecken. Beispielsweise sind die Querträger 11A-11N zwischen der Karosserie 92 und einer Stoßfängerabdeckung oder einem Stoßfänger 96 des Fahrzeugs 90 angeordnet, was teilweise in den Zeichnungen angedeutet ist. Allerdings ist es möglich, dass der Querträger 11A-11N durchaus auch den Stoßfänger des Fahrzeugs 90 bildet, zumindest einen Bestandteil des Stoßfängers darstellt. Jedoch ist es vorteilhaft, wenn der Querträger 11A-11N durch eine Stoßfängerabdeckung und/oder eine Heckschürze des Fahrzeugs 90 abgedeckt ist, also in Gebrauchslage nicht sichtbar ist.

Die Querträger 11A-11N sind anhand von einzeln als Seitenträger 12A-12N sowie 13A-13N bezeichneter Seitenträger 12 bzw. 13 am Fahrzeug 90 befestigt. Beispielsweise sind die Seitenträger 12A-12N, 13A-13N an Längsträgern 97 der Karosserie 92 des Fahrzeugs 90 befestigt oder befestigbar, z.B. verschraubt und/oder verklebt und/oder verschweißt.

Die Querträger 11A-11N tragen Halterungen 14A-14N beispielsweise für eine Anhängekupplung 15A-15N zum Anhängen eines Anhängers 100. Selbstverständlich kann an die Anhängekupplung 15A-15N auch ein Lastenträger, beispielsweise ein Fahrradträger, aufgesetzt werden, so dass die Halterung 14 im Prinzip mit der Anhängekupplung 15 auch ein Lastenträger-Kupplungsteil trägt oder hält. Die nachfolgend beschriebenen Steckaufnahmen für die Anhängekupplung 15A-15N eignen sich aber ohne weiteres auch für ein Kuppelstück, beispielsweise einen Steckvorsprung eines Lastenträgers, um diesen lösbar am Fahrzeug 90 zu befestigen und bei Nichtgebrauch wieder vom Fahrzeug 90 zu entfernen.

Die Seitenträger 12A und 13A, 12C und 13C, 12D und 13D, 12E und 13E, 12F und 13F, 12H und 13H, 12J und 13J, 12K und 13K, 12L und 13L, 13M und 13M sowie 12N und 13N weisen schwertartige oder langgestreckte Seitenträgerbasiskörper 20 auf, die teilweise unterschiedliche Querschnitts- oder Außenumfangskonturen aufweisen, auf die aber im Einzelnen nachfolgend nicht eingegangen werden soll. Jedenfalls sind an den Seitenträgerbasiskörpern 20 Schraubaufnahmen 21 oder sonstige Befestigungsmittel zur Befestigung an der Karosserie 92 des Fahrzeugs 90 vorgesehen. Weiterhin vorteilhaft ist es, wenn die Seitenträgerbasiskörper 20 Verformungstrukturen 22 aufweisen, beispielsweise quer zu ihrer Längsachse schräg oder winkelig verlaufende Abschnitte, die im Falle eines Aufpralls auf das Heck 91 des Fahrzeugs 90 Energie durch Verformung aufnehmen können.

An einem Längsendbereich eines jeweiligen Seitenträgerbasiskörpers 20 ist eine Querträgeraufnahme 23 zur Aufnahme des jeweiligen Querträgers 11 vorgesehen. Die Querträgeraufnahme 23 ist von einem Stützarm 24 und optional einem Haltearm 25 begrenzt. Der Stützarm 24 ist in Gebrauchslage der Trägeranordnung 10 unten, der Haltearm 25 oben angeordnet. Beispielsweise klammern die beiden Arme 24 und 25 den jeweiligen Querträger 11. Der Stützarm 24 und der Haltearm 25 können gabelförmig angeordnet sein. Im Verbindungsbereich zwischen dem Querträger 11 und der Querträgeraufnahme 23 können Verschraubungen, Verschweißungen oder dergleichen vorgesehen sein. Der Haltearm 25 ist optional. Beispielsweise ist er bei den Seitenträgern 12J, 13J nicht vorhanden. Dort ist die Querträgeraufnahme 23 sozusagen als eine Aufnahmekonsole ausgestaltet, die den Querträger 11 unterseitig stützen.

Die Seitenträger 12G und 13G sowie 121 und 131 sind in der Art von Haltekonsolen oder Halteplatten ausgestaltet. Ihre Seitenträgerbasiskörper 120 weisen in der Zeichnung nicht sichtbare Schraubaufnahmen auf, die von Verbindungsbolzen 121, insbesondere Schraubbolzen, durchdrungen sind. Die Verbindungsbolzen 121 sind mit der Karosserie 92, beispielsweise deren Längsträgern 97, verschraubt. Die Seitenträgerbasiskörper 120 sind plattenartig und weisen Querträgeraufnahmen 123 auf, in denen der jeweilige Querträger 11G, 11I aufgenommen ist. Die Querträgeraufnahmen 123 sind durch Stützarme 124 und Haltearme 125 begrenzt. Die Stützarme 124 und die Haltearme 125 stehen winkelig und/oder schräg von einer Grundplatte 122, an der Schraubaufnahmen vorgesehen sind, ab, vorzugsweise schräg dem jeweiligen Querträger 11G und 11I zugeneigt. In der Querträgeraufnahme 123 kann der Querträger 11G oder 11I beispielsweise in einem Klemmsitz, formschlüssig, stoffschlüssig oder dergleichen gehalten sein, beispielsweise anhand einer Verschweißung mit mindestens einer Schweißnaht, einer Punktschweißung oder dergleichen.

Bei der Trägeranordnung 10B sind deren Seitenträger 12B, 13B aus einem Stück integral mit dem Querträger 11B hergestellt. Ihre Seitenträgerbasiskörper 220 stehen vom Querträger 11B winkelig, insbesondere etwa rechtwinkelig ab und sind mit der Karosserie 92 verschraubbar, in dem in der Zeichnung nicht dargestellte Verbindungsbolzen oder Schraubbolzen durch entsprechende Schraubaufnahmen 221 durchgesteckt sind und mit der Karosserie 92 verbunden werden.

Die jeweilige Anhängekupplung 15 kann fest, lösbar oder beweglich am Querträger 11 befestigt sein. So ist beispielsweise ein Kupplungsarm 16A der Anhängekupplung 15A, an dessen freiem Endbereich ein Kuppelstück 17, insbesondere eine Kupplungskugel, angeordnet ist, fest an der Halterung 14A gehalten. Die Halterung 14A weist insbesondere plattenartige Haltekörper 30 auf, die von dem Querträger 11A abstehen und zwischen denen der Kupplungsarm 16A gehalten ist, beispielsweise anhand einer Verschweißung und/oder einer Verschraubung.

Die Anhängekupplung 15B ist jedoch lösbar an der zugeordneten Halterung 14B befestigt. Die Halterung 14B weist beispielsweise eine Aufnahmehülse 31 auf, in die ein Steckende 18 des Kupplungsarms 16B einsteckbar ist. Dieses Konzept ist auch bei der Trägeranordnung 10E, 10F, 10L, 10M und 10N realisiert, bei denen jeweils eine derartige Aufnahmehülse 31 vorhanden ist. Dabei ist es möglich, dass die Aufnahmehülse 31 unmittelbar am Querträger 11 befestigt ist, beispielsweise im Falle der Halterung 14B, 14E, 14K oder anhand von Haltekörpern 30 an dem jeweiligen Querträger 11 gehalten ist, so z.B. wie bei der Trägeranordnung 10F, 10L, 10M und 10N, bei denen die Aufnahmehülse 31 sandwichartig zwischen den Haltekörpern 30, die beispielsweise als Halteplatten ausgestaltet sind, gehalten ist. Die Haltekörper 30 ihrerseits wiederum sind mit dem jeweiligen Querträger 11 beispielsweise verschweißt, verschraubt oder dergleichen.

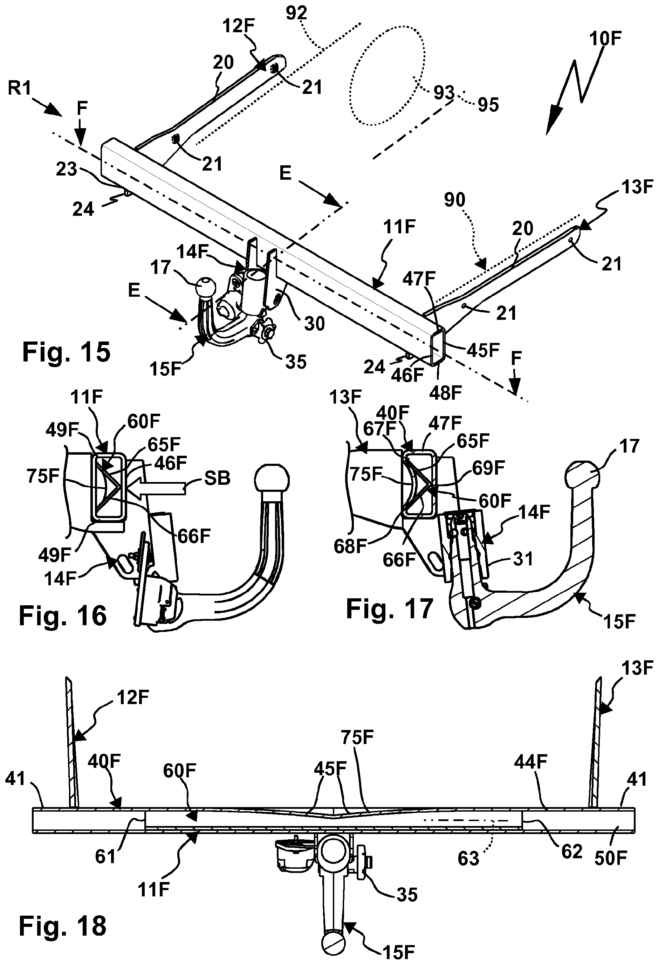

Das Verriegelungskonzept im Zusammenhang mit der Aufnahmehülse 31 wird insbesondere durch Fig. 17 etwas deutlicher. Am Kupplungsarm 16 ist beispielsweise ein Betätigungskörper 32 beweglich gelagert, insbesondere verschieblich gelagert, mit welchem Verriegelungskörper 33, insbesondere Kugeln, die am Kupplungsarm 16 beweglich gelagert sind, insbesondere radial beweglich gelagert sind, zwischen einer Verriegelungsstellung, in der sie in eine Verriegelungsaufnahme 34 der Aufnahmehülse 31 eingreifen, und einer Entriegelungsstellung, bei der sie aus der Verriegelungsaufnahme 34 herausbewegt oder heraus bewegbar sind, betätigbar sind. Das Betätigungselement 35 ist beispielsweise ein Handrad oder dergleichen anderer Betätigungskörper, der direkt oder über ein in der Zeichnung nicht dargestelltes Getriebe auf den Betätigungskörper 32 einwirkt.

Bei den Trägeranordnungen 10G und 101 ist der Kupplungsarm 16G und 161 zwischen einer Gebrauchsstellung GS und einer Nichtgebrauchsstellung NG beweglich, beispielsweise um eine Schwenkachse SC schwenkbeweglich und/oder schiebebeweglich, gelagert. In der Gebrauchsstellung GS steht der Kupplungsarm 16G, 161 nach hinten vor das Heck 91, insbesondere auch den Stoßfänger 96, vor, so dass der Anhänger 100 angehängt oder ein Lastenträger 101 auf dem Kupplungsarm 16G, 161 aufgesetzt werden kann. In der Nichtgebrauchsstellung NG ist der Kupplungsarm 16G, 161 zum Heck 91 hin verstellt, beispielsweise ganz oder teilweise unter dem Stoßfänger 96 zurückverstellt.

Der Kupplungsarm 16G oder 161 kann durch einen motorischen Antrieb 37 zwischen der Gebrauchsstellung GS und der Nichtgebrauchsstellung NG antreibbar sein, beispielsweise durch einen Elektromotor und/oder in der Gebrauchsstellung GS oder der Nichtgebrauchsstellung NG oder beiden verriegelbar sein, beispielsweise mit einer Verriegelungstechnik ähnlich wie im Zusammenhang mit der Aufnahmehülse 31 beschrieben. Eine motorische Entriegelung und/oder Verriegelung ist beispielsweise anhand eines Entriegelungsantriebs 36, den man auch als Verriegelungsantrieb betrachten kann, möglich.

Man erkennt, dass beispielsweise bei einem Heckaufprall auf das Fahrzeug 90 die jeweilige Trägeranordnung 10 sowohl eine Kraft in Richtung der Fahrzeuglängsachse 95, als auch eine Torsionsbelastung aushalten muss, die sich beispielsweise dadurch ergibt, dass der Kupplungsarm 16 an der Halterung 14 in der Art eines Schwenkhebels Kraft ausübt, so dass der Querträger 11 um seine Längsachse herum torsionsbelastet ist. Durch die nachfolgend erläuterten Versteifungsmaßnahmen ist der jeweilige Querträger 11 jedoch derart versteift und verstärkt, dass er bei einem Heckaufprall auf das Fahrzeug 90 eine optimale Steifigkeit und somit einen optimalen Schutz für den Energiespeicher 94 darstellt:
Die Querträger 11A-11N weisen Tragprofile 40A- 40M, also ganz allgemein Tragprofile 40, auf, die durch Versteifungsprofile 60, nämlich Verstärkungsprofile 60A-60N, versteift sind. Ohne weiteres könnten aber auch die Seitenträger 12A-12N, 13A-13N auf diese Weise hergestellt sein, d. h. Tragprofile mit Versteifungsprofilen aufweisen, die nachfolgend noch detaillierter erläutert werden. Die Tragprofile 40A - 40N sind beispielsweise als Rohrkörper ausgestaltet.

Längsendbereiche 41 der Tragprofile 40A - 40N sind an den Seitenträgern 12A - 12N sowie 13A - 13N gehalten, wobei längsmittig des Tragprofils 40 die Halterung 14A - 14N angeordnet ist. In dem mittleren Abschnitt des Tragprofils 40 befindet sich beispielsweise ein Versteifungsabschnitt 51, während an den Längsendbereichen 41 optional Versteifungsabschnitte 52 vorgesehen sein können, was nachfolgend noch deutlicher wird.

Das Tragprofil 40A - 40N erstreckt sich entlang einer im Wesentlichen geradlinigen, bei manchen Ausführungsbeispielen auch vollständig oder abschnittsweise gekrümmten, Längsachse 43. Mithin haben die Tragprofile 40A - 40N eine langgestreckte Gestalt.

Die Tragprofile 40A - 40N weisen Umfangswände 44 auf, die jeweils einen Innenraum 50 begrenzen oder umschließen. Die Tragprofile 40A - 40N weisen zum Beispiel konkret Umfangswände 44A - 44N auf, die einen rechteckigen oder runden Querschnitt aufweisen.

So können beispielsweise die rechteckigen Querschnitte der Tragprofile 40A, 40B, 40D, 40E, 40F, 40G, 40H, 40I, 40J, 40K, 40L, 40M, 40N in Gebrauchslage im Wesentlichen vertikal verlaufende oder orientierte Umfangswandabschnitte 45, 46 aufweisen, zwischen denen sich in Gebrauchslage im Wesentlichen horizontal verlaufende Umfangswandabschnitte 47 und 48 erstrecken. Die Umfangswandabschnitte 45, 46, 47 und 48 der Tragprofile 40A, 40B, 40C, 40D, 40E, 40F, 40G, 40H, 40I, 40J, 40K, 40L, 40M, 40N werden teilweise auch zur Kennzeichnung von Unterschieden mit Großbuchstaben A-N näher gekennzeichnet.

Der Umfangswandabschnitt 45 ist beispielsweise dem Heck 91 zugewandt, dem Umfangswandabschnitt 46 vom Heck 91 abgewandt. Die Umfangswandabschnitte 47 und 48 bilden obere und untere Umfangswandabschnitte. Die Umfangswandabschnitte 45 - 48 können über Eck oder eckig miteinander verbunden sein. Bevorzugt ist jedoch ein runder oder gerundeter Übergang, beispielsweise in ausgerundeten Kantenbereichen 49 zwischen den Umfangswandabschnitten 45 bis 48. Der Kantenbereich 49 verläuft parallel oder im Wesentlichen parallel zur Längsachse 43.

Die Umfangswand 44A - 44N begrenzt einen Innenraum 50A - 50N, der ganz oder teilweise geschlossen ist. Somit ist das jeweilige Tragprofil 40A - 40N an sich schon hochbelastbar und biegesteif, wird aber durch die nachfolgenden Versteifungsmaßnahmen noch zusätzlich versteift.

Das Tragprofil 40A ist z.B. mit Versteifungsprofilen 60A, 160A versehen, die in der Art von Aufsteckmuffen oder Hülsen ausgestaltet sind. Die Versteifungsprofile 60A, 160A weisen Umfangswände 64A auf, die eine Innenkontur aufweisen, die der Außenkontur der Umfangswand 44A bzw. des Tragprofils 40A entsprechen, so dass die Versteifungsprofile 60A, 160A formschlüssig auf das Tragprofil 40A sozusagen passen.

Die Umfangswand 64A weist beispielsweise Seitenwandabschnitte 65A, 66A auf, die in Gebrauchslage im Wesentlichen vertikal verlaufen oder hochstehend sind und zwischen denen in Gebrauchslage im Wesentlichen horizontal verlaufende oder sich horizontal erstreckende Seitenwandabschnitte 67A, 68A vorgesehen sind. Die Seitenwandabschnitte 65A - 68A sind über gerundete Kantenabschnitte oder Kantenbereiche 69A miteinander verbunden. Bevorzugt sind die Seitenwandabschnitte 65A - 68A und/oder die Umfangswand 44A einstückig oder aus einem einzigen Grundkörper gebildet.

Jedenfalls begrenzt die Umfangswand 64A einen Innenraum 70, in den das Tragprofil 40A eingreift. Dabei wird das Tragprofil 40A quer zu seiner Längsachse 43 vom Versteifungsprofil 60A, 160A abgestützt. Zwischen dem Außenumfang des Tragprofils 40A und dem Innenumfang des Versteifungsprofils 60A, 160A kann eine stoffschlüssige Verbindung vorgesehen sein, beispielsweise eine Verklebung, Verschweißung oder eine Lötverbindung oder eine Kombination davon.

Es ist weiterhin möglich, dass das Tragprofil 40A im Rahmen einer Innenumformung sozusagen nach außen hin aufgeweitet wird, insbesondere durch eine Innenhochdruckumformung, z.B. eine Hydroformung, sodass die Versteifungsprofile 60A, 160A formschlüssig am Tragprofil 40A gehalten sind. So kann beispielsweise ein Verformungsfluid, insbesondere Wasser, in den Innenraum 50A eingepresst werden.

Die Versteifungsprofile 60A sind beispielsweise an den Längsendbereichen 41 des Tragprofils 41A angeordnet. Ein erstes Längsende 61 eines Versteifungsprofils 60A erstreckt sich bis zum jeweiligen Längsende 42 des Tragprofils 40A. Somit ist dieses bis zu seinen Längsenden durch das Versteifungsprofil 60 ummantelt.

Zur Quermitte hin jedoch sind bei den Versteifungsprofilen 60A an den zu den Längsenden 61 entgegengesetzten Längsenden 62 Stirnseiten 71 vorhanden, also Schmalseiten der Umfangswand 64, die einen Schrägverlauf bezüglich der Längsachse 43 des Tragprofils 40A und/oder bezüglich einer Längsachse 63 des Versteifungsprofils 60A aufweisen. Beispielsweise sind an den Stirnseiten 71 Vertiefungen 72 vorgesehen, insbesondere Rücksprünge, die vorzugsweise muldenartig sind oder ausgerundet sind. Die Vertiefung 72 erstreckt sich beispielsweise bei den oberen und/oder unteren Seitenwandabschnitten 65A, 66A von den Kantenbereichen 69A zurück, so dass das Versteifungsprofil 60A in den Kantenbereichen 69A sozusagen länger als in einem Zwischenraum zwischen den Kantenbereichen 69A ist. Das Versteifungsprofil 160A hat an beiden Längsendbereichen bezüglich der Längsachse 43 oder 63 jeweils eine Vertiefung 72. Die Vertiefungen 72 sind zwar an den oberseitigen und/oder unterseitigen Abschnitten der Umfangswand 64A vorgesehen. Alternativ oder ergänzend wären aber auch schräg verlaufende Kanten, ausgerundete Bereiche oder Vertiefungen in der Art der Vertiefungen 72 an den vertikal verlaufenden Seitenwandabschnitten, beispielsweise den Seitenwandabschnitten 65A und/oder 66A möglich

Bei der Trägeranordnung 10B hat der Querträger 11B einen mittigen Versteifungsabschnitt 51 sowie seitliche Versteifungsabschnitte 52, die in den Übergangsbereichen zwischen dem Querträger 11B und den Seitenträgern 12B, 13B vorgesehen sind.

Der Querträger 11B weist ein Tragprofil 40B mit in Gebrauchslage oberen und unteren Seitenwänden oder Umfangswandabschnitten 47B, 48B auf, die quer zur Längsachse 43 des Tragprofils 40B breiter als seitliche 45B, 46B Umfangswandabschnitte sind, die sich zwischen den Umfangswandabschnitten 47B, 48B erstrecken.

An dem mittigen Versteifungsabschnitt 51 ist ein Versteifungsprofil 60B in den Innenraum 50B des Tragprofils 40B aufgenommen. Das Versteifungsprofil 60B entspricht in seinen Außenumfangskonturen und/oder bezüglich seiner Längserstreckung in Bezug auf die Längsachse 43 dem Versteifungsprofil 160A. Das Versteifungsprofil 160A ist mittig am Querträger 11B angeordnet. Anders als das Versteifungsprofil 160A ist das Versteifungsprofil 60B nicht am Außenumfang, sondern am Innenumfang des Tragprofils 40B des Querträgers 11B angeordnet.

Das Versteifungsprofil 60B hat eine Außenumfangskontur, die einer Innenumfangskontur des Tragprofils 40B an seinem Innenumfang entspricht, sodass das Versteifungsprofil 60B formschlüssig im Innenraum 50B am Innenumfang des Tragprofils 40B anliegt. Das Versteifungsprofil 60B weist den Seitenwandabschnitten 65A-68A entsprechende Seitenwandabschnitte 65B-68B auf, zwischen denen abgerundete Kantenbereiche 69B entsprechend der abgerundeten Kantenbereiche 49B des Tragprofils 40B vorgesehen sind. Somit liegt das Versteifungsprofil 60B im Innenraum 50B auch mit seinen Kantenbereichen 69B formschlüssig an der Innenumfangskontur des Tragprofils 40B an. Zwischen dem Versteifungsprofil 60B und dem Tragprofil 40B kann eine formschlüssige oder stoffschlüssige Verbindung vorgesehen sein, beispielsweise eine Lötverbindung, Schweißverbindung oder Klebeverbindung. Weiterhin ist es möglich, dass dann, wenn das Versteifungsprofil 60B im Innenraum 50B angeordnet ist, die Umfangswand 44B des Tragprofils 40B im Versteifungsabschnitt 51 in Richtung des Versteifungsprofils 60B verformt wird, sodass es beispielsweise eine Einbuchtung oder Einkerbung 73B aufweist, die zumindest teilweise auch in eine dabei entstehende Vertiefung der Seitenwandabschnitte 65B-68B eingreift und somit einen formschlüssigen Halt des Versteifungsprofils 60B am Tragprofil 40B ermöglicht.

An den Übergangsbereichen oder Verbindungsbereichen des Querträgers 11B mit den Seitenträgern 12B, 13B sind weitere Versteifungsprofile 160B angeordnet, beispielsweise Rohrkörper. Im Querschnitt sind die Versteifungsprofile 160B vorzugsweise rund. Ihre Umfangswände 64B haben also eine Runde Außenumfangskontur. Ohne weiteres wäre aber auch eine polygonale, insbesondere eine rechteckige oder flach-rechteckige Außenumfangskontur der Versteifungsprofile 160B möglich.

Die Versteifungsprofile 160B sind vollständig im Innenraum 50B des Querträgers 11B sowie Innenräumen 250 der Seitenträger 12B, 13B aufgenommen.

Die Seitenträger 12B, 13B sind mit dem Querträger 11B einstückig oder aus einem einstückigen Rohling geformt. Die Seitenträger 12B, 13B weisen dementsprechend eine Umfangswand 244 auf. Die Umfangswand 244 weist einen von der Karosserie 92 abgewandten Umfangswandabschnitt 246 sowie in den Übergangsbereichen zum Querträger 11B einen der Karosserie 92 zugewandten Umfangswandabschnitt 245 auf, zwischen denen sich Umfangswandabschnitte 247, 248 erstrecken. Die Umfangswandabschnitte 245-248 begrenzen die Innenräume 250. Zu den freien, vom Querträger 11B abgewandten Endbereichen weisen die Seitenträger 12B, 13B lediglich die Umfangswandabschnitte 245, 247, 248 auf, nicht jedoch den der Karosserie 92 zugewandten Umfangswandabschnitt 245. Mithin sind also die Seitenträger 12B, 13B zur Karosserie 92 hin sozusagen teilweise offen.

Die Versteifungsprofile 160B weisen Seitenschenkel 161, 162 auf, zwischen denen sich ein Krümmungsabschnitt 163 befindet.

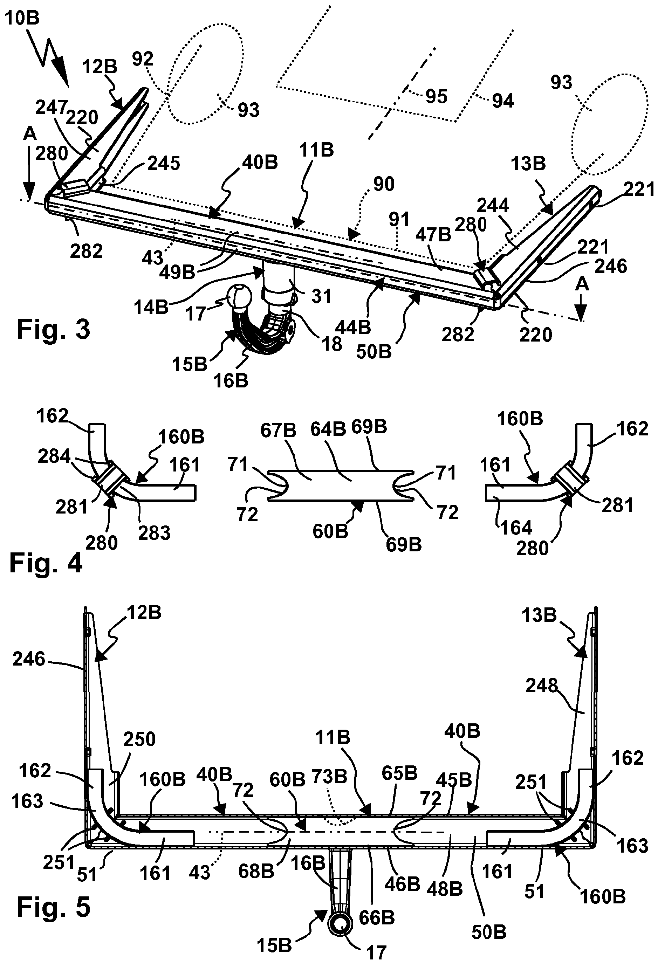

Aus dem Grundmaterial, aus dem die Umfangswandabschnitte 47, 48, 247, 248 gebildet sind, sind beispielsweise Kerben oder Winkelsegmente ausgeschnitten, sodass der Rohling zu der Trägeranordnung 10B bzw. dem Tragprofil 40B umgeformt werden kann, wie in den Figuren 3, 5 dargestellt. Dabei ist es möglich, dass schon zuvor die Versteifungsprofile 160B in die Innenräume 50B, 250 eingelegt sind, d. h. dass der Rohling sozusagen um die Versteifungsprofile 160B herum gebogen wird. Möglich ist aber auch eine Variante, bei der die Versteifungsprofile 160B von den Seitenträgern 12B, 13B her in die Innenräume 250 und sozusagen anschließend um eine gekrümmte Bahn in den Innenraum hineingeschoben werden.

Für einen festen Halt der Versteifungsprofile 160B am Tragprofil 40B kann beispielsweise eine Verklebung, Verschweißung oder anderweitige stoffschlüssige Verbindung vorgesehen sein.

Bevorzugt ist jedoch eine formschlüssige Verbindung, beispielsweise anhand von Klammern 280. Die Klammern 280 weisen Grundschenkel 281 auf, von denen Seitenschenkel 282 winkelig, beispielsweise rechtwinkelig abstehen.

Die Klammern 280 dienen zweckmäßigerweise dazu, eine Winkellage der Seitenträger 12B, 13B bezüglich des Querträgers 11B zu fixieren. Der Grundschenkel 281 ist beispielsweise an einem Übergangsbereich zwischen den Umfangswandabschnitten 47, 247 angeordnet. Die von ihm abstehenden Seitenschenkel 282 dringen in den Innenraum 50B, 250 durch Klammeraufnahmen 251 ein, die an den Umfangswandabschnitten 47, 247 und vorzugsweise auch an den Umfangswandabschnitten 48, 248 vorgesehen sind. Die Klammern 280 können mit dem Querträger 11B und/oder den Seitenträgern 12B, 13B stoffschlüssig verbunden sein, beispielweise verschweißt oder verlötet.

Zudem dienen die Klammern 280 dazu, die Versteifungsprofile 160B bezüglich des Tragprofils 40B zu fixieren.

Die Seitenschenkel 282 weisen jeweils Aufnahmen 283 auf, die von seitlichen Armen 284 begrenzt sind. Die Versteifungsprofile 160B sind zwischen den Armen 284 aufgenommen. Beispielsweise greift der Krümmungsabschnitt 163 des Versteifungsprofils 160B in die Aufnahmen 283 ein. Eine Innenumfangskontur der Aufnahmen 283 entspricht zweckmäßigerweise einer Außenumfangskontur des Versteifungsprofils 160B.

Zudem ist es vorteilhaft, wenn das Versteifungsprofil 160B mit mindestens einem Abschnitt seiner Umfangswand 164 an der Umfangswand 44B des Tragprofils 40B anliegt und dort vorzugsweise noch stoffschlüssig fixiert ist, beispielsweise verschweißt oder verlötet. So liegt beispielsweise die Umfangswand 164 an den Umfangswandabschnitten 46, 247 und/oder den Umfangswandabschnitten 47, 247 und/oder den Umfangswandabschnitten 48, 248 an.

Bei der Trägeranordnung 10C ist sozusagen eine Rohr-in-Rohr-Konstruktion des Querträgers 11C vorgesehen.

Das Tragprofil 40C der Trägeranordnung 10C weist eine Umfangswand 44C mit einem runden, vorzugsweise kreisrunden, Außenumfang auf, wobei selbstverständlich auch ein elliptischer, ovaler oder dergleichen anderer gekrümmter oder runder Außenumfang ohne weiteres möglich ist. Das Tragprofil 40C ist von einem Versteifungsprofil 60C durchsetzt, welches einen polygonalen Außenumfang, beispielsweise einen rechteckigen oder quadratischen, Außenumfang aufweist. Alternativ zu dem rechteckigen Außenumfang ist ohne weiteres ein dreieckiger Außenumfang, ein 8-eckiger oder 6-eckiger Außenumfang möglich. Vorzugsweise liegen Kantenbereiche 69C am Außenumfang des Versteifungsprofils 60C an einem Innenumfang des Tragprofils 40C an. Jedenfalls ist das Versteifungsprofil 60C im Innenraum 50C des Tragprofils 40C angeordnet.

In den Kantenbereichen 69C kann eine stoffschlüssige Verbindung, beispielsweise eine Schweißverbindung, Klebeverbindung, Lötverbindung oder dergleichen zwischen dem Versteifungsprofil 60C und dem Tragprofil 40C vorgesehen sein aber auch eine formschlüssige Verbindung, beispielsweise anhand von Kerb-Vertiefungen 75C, die an der Umfangswand 44C des Tragprofils 40C in Richtung seines Innenraums 50C an einer oder mehreren Stellen bezüglich der Längsachse 43 vorgesehen sind, können in korrespondierende Vertiefungen an der Umfangswand 64C des Versteifungsprofils 60C eingreifen. Bevorzugt sind die Kerb-Vertiefungen 75C an den Kantenbereichen 69C vorgesehen.

Das Versteifungsprofil 60C erstreckt sich jedenfalls so weit entlang des Querträgers 11, dass es auch im Abstützungsbereich der Seitenträger 12C, 13C das Tragprofil 40C versteift oder verstärkt. Bevorzugt ist es, wenn das Versteifungsprofil 60C sich über eine gesamte Längslänge des Tragprofils 40C erstreckt. Vorliegend ist es sogar so, dass das Längsende 61 des Versteifungsprofils 60C über das Längsende 42 des Tragprofils 40C vorsteht. Das ist aber nicht nötig.

Bevorzugt ist es, wenn die Halterung 14C zumindest teilweise durch den Querträger 11C bereitgestellt wird. So kann beispielsweise ein Schaft 18C des Kupplungsarms 16C in einer Ausnehmung 19C angeordnet sein, die sowohl das Tragprofil 40C als auch das Versteifungsprofil 60C durchsetzt. Der Schaft 18C ist vorzugsweise mit dem Tragprofil 40C und/oder dem Versteifungsprofil 60C formschlüssig und/oder stoffschlüssig verbunden.

Bei der Trägeranordnung 10D ist ein Tragprofil 40D vorgesehen, welches einen flach-rechteckigen Querschnitt aufweist. In Gebrauchslage obere und untere Umfangswandabschnitte 47D, 48D einer Umfangswand 44D sind quer zur Längsachse 43 des Tragprofils 40D schmaler als in Gebrauchslage vertikal oder im Wesentlichen vertikal verlaufende Umfangswandabschnitte 45D, 46D. Die Umfangswand 44D begrenzt also einen Innenraum 50D.

In den Innenraum 50D ist ein Versteifungsprofil 60D aufgenommen, welches ebenfalls einen rechteckigen, insbesondere einen quadratischen, Querschnitt quer zur Längsachse 43 des Tragprofils 40D oder des Versteifungsprofils 60D aufweist. Während Seitenwandabschnitte 67D, 68D einer Umfangswand 64D des Versteifungsprofils 60D von den ihnen gegenüberliegenden Umfangswandabschnitten 47D, 48D einen Abstand aufweisen, liegen Seitenwandabschnitte 65D, 66D der Umfangswand 64D flächig an den Innenseiten der Umfangswandabschnitte 45D, 46D an. Dort kann eine stoffschlüssige Verbindung vorgesehen sein. Ohne weiteres wäre aber möglich, dass das Versteifungsprofil 60D quer zu der Längsachse 43D andere Positionen relativ zu dem Tragprofil 40D aufweist, sodass beispielsweise der Seitenwandabschnitt 67D am Umfangswandabschnitt 47D anliegen oder näher bei diesem angeordnet sein kann oder auch der in der Zeichnung untere Seitenwandabschnitt 68D am Umfangswandabschnitt 48D anliegen oder näher bei diesem angeordnet sein kann.

Bei der Trägeranordnung 10E weist der Querträger 11E ein Tragprofil 40E auf, welches eine Umfangswand 44E mit rechteckigem, vorliegend beispielsweise quadratischem Querschnitt aufweist. Das Tragprofil 40E ist also beispielsweise ein Rohrkörper. Umfangswandabschnitte 45E-48E der Umfangswand 44E weisen quer zur Längsachse 43 des Tragprofils 40E dieselbe Querbreite oder Querhöhe auf, was den quadratischen Querschnitt ergibt. Ohne weiteres wäre aber auch ein flach rechteckiger oder sonstiger polygonaler Querschnitt möglich, um das nachfolgend beschriebene Versteifungsprofil 60E im Innenraum 50E des Tragprofils 40E, der durch die Umfangswand 44E begrenzt ist, aufzunehmen.

Das Versteifungsprofil 60E weist eine runde, vorliegend kreisrunde, Umfangswand 64E auf. Die Umfangswand 64E liegt tangential, d. h. mit ihrem Außenumfang, in Kontaktbereichen 74E an dem Innenumfang des Tragprofils 40E, also an den Umfangswandabschnitten 45E-48E, an. Dort ist vorzugsweise eine stoffschlüssige und/oder formschlüssige Verbindung realisiert, beispielsweise in den Kerb-Vertiefungen in der Art der Kerb-Vertiefung 75 C am Tragprofil 40E in den Kontaktbereichen 74E mit dem Versteifungsprofil 60E vorgesehen. Als stoffschlüssige Verbindung eignet sich insbesondere eine Lötverbindung oder Klebeverbindung oder eine Kombination davon.

Es versteht sich, dass bei einem beispielsweise flach-rechteckigen Querschnitt eines nicht dargestellten Tragprofils in der Art des Tragprofils 40E anstelle des Versteifungsprofils mit einem runden Querschnitt durchaus auch ein Versteifungsprofil mit einem ovalen, elliptischen oder dergleichen anderen gekrümmten Querschnitt seiner Umfangwand im Innenraum dieses Tragprofils angeordnet sein kann.

Ein derartiges Tragprofil hat beispielsweise eine Querschnittskontur wie das nachfolgend beschriebene Tragprofil 40F der Trägeranordnung 10F. Das Tragprofil 40F weist eine Umfangswand 44F auf, die einen flach-rechteckigen Querschnitt des Tragprofils 40F definiert. In der Gebrauchslage im Wesentlichen vertikal verlaufende Umfangswandabschnitte 45F, 46F sind dementsprechend quer zur Längsachse 43 breiter als in Gebrauchslage obere und untere Umfangswandabschnitte 47F, 48F der Umfangswand 44F.

In dem Tragprofil 40F ist jedoch anstelle eines umfangsseitig geschlossenen Verstärkungsprofils ein Verstärkungsprofil 60F angeordnet, welches zwei winkelig voneinander abstehende Seitenschenkel oder Seitenwandabschnitte 65F, 66F aufweist. Die Seitenwandabschnitte 65F, 66F sind in einem Kantenbereich 69F miteinander verbunden.

Das Versteifungsprofil 60F ist mit dem Tragprofil 40F vorzugsweise formschlüssig verbunden. So ist beispielsweise eine durch eine Umformung der Umfangswand 44F, insbesondere des Umfangswandabschnitts 45F, eine derartige Verbindung geschaffen, bei der eine Vertiefung 75F an der Umfangswand 44F ausgebildet wird. Die Vertiefung 75F erstreckt sich beispielsweise zwischen die Seitenwandabschnitte 66F, 65F hinein. Es ist möglich, dass dadurch freie Endbereiche 67F, 68F der Seitenwandabschnitte oder Schenkel 65F, 66F in Richtung von Kantenbereichen 49F, die parallel zur Längsachse 43 zwischen dem Umfangswandabschnitt 45F und den Umfangswandabschnitten 47F, 48F verlaufen, verdrängt werden. Jedenfalls stützen sich die freien Endbereiche 67F, 68F an der durch die Vertiefung 75F geschaffenen Innenumfangskontur der Umfangswand 44F ab. Vorteilhaft ist es weiterhin, wenn sich durch die Vertiefung 75F auch der Kantenbereich 69F in Richtung des dem Umfangswandabschnitt 45F gegenüberliegenden Umfangswandabschnitts 46F derart verlagert, dass der Kantenbereich 69F sich am Umfangswandabschnitt 46F abstützt.

Es ist aber auch möglich, dass zwischen dem Kantenbereich 69F und dem Innenumfang der Umfangswand 44F, insbesondere der Umfangswand 44F, ein Abstand vorgesehen ist. Dieser Abstand kann beispielsweise bei einer Kraftbeaufschlagung oder Stoßbelastung SB, die bei einem Heckaufprall auftritt, einen Verformungsraum darstellen, in den hinein sich die Umfangswand 44F verformen kann, bevor sie in Kontakt mit dem Versteifungsprofil 60F gelangt. Durch die Stoßbelastung SB ist es möglich, dass beispielsweise die freien Endbereiche 67F, 68F in Richtung der Innenkanten, also in die Kantenbereiche 49F, des Innenraums 50F aufgespreizt oder verlagert werden. Mithin bildet also das Versteifungsprofil 60F sozusagen ein aktives Crashelement bei einer derartigen Anordnung oder Konfiguration.

Das Versteifungsprofil 60F ist bezüglich der Längsachse 43 kürzer als das Tragprofil 40F. Das Versteifungsprofil 60F verstärkt den Querträger 11F im Wesentlichen mittig, nämlich dort, wo durch die Halterung 14F Torsionskräfte und/oder Aufprallkräfte im Sinne der Kraftbeaufschlagung SB auftreten. Längsenden 61, 62 des Versteifungsprofils 60F sind also gegenüber den Längsenden 41 des Tragprofils 40F zurückversetzt. Ohne weiteres möglich wäre aber, dass das Versteifungsprofil 60F sich bis zu den Längsenden 41 des Tragprofils 40F erstreckt, insbesondere bis zu den Seitenträgern 12F, 13F

Ein Tragprofil 40G der Trägeranordnung 10G ist an seinen Längsendbereichen 41, insbesondere seinen Längsenden 42, an den Seitenträgern 12G, 13G gehalten. Dort sowie auch in einem mittleren Abschnitt des Tragprofils 40G ist ein Versteifungsprofil 60G vorgesehen, welches sich am Tragprofil 40G abstützt und zumindest teilweise in einen Innenraum 50G des Tragprofils 40G eingreift. Allerdings erstreckt sich das Versteifungsprofil 60G nicht bis zu den Längsenden 42 des Tragprofils 40G, sondern nur bis zu den Querträgeraufnahmen 123.

Das Tragprofil 40G hat eine Umfangswand 44G, mit in Gebrauchslage schmaleren oberen und unteren Umfangswandabschnitten 47G, 48G, zwischen denen sich in Gebrauchslage vertikal orientierte Umfangswandabschnitte 45G, 46G erstrecken.

An dem Umfangswandabschnitt 45G ist eine Aussparung 53G vorgesehen, in der das Versteifungsprofil 60G aufgenommen ist. Die Aussparung 53G erstreckt sich zwischen den Längsendbereichen 41, an denen der Umfangswandabschnitt 45G keine Aussparung aufweist, parallel zur Längsachse 43 des Tragprofils 40G. Dadurch sind insbesondere durch die Umfangswandabschnitte 47G und 48G obere und untere Gurtabschnitte 54G, 55G des Tragprofils 40G gebildet. An den Gurtabschnitten 54G, 55G ist noch jeweils ein Teilabschnitt 56 des Umfangswandabschnitts 45G vorhanden, d. h. von den Umfangswandabschnitten 47G und 48G steht der im Sinne einer Stabilisierung oder Versteifung wirkende Teilabschnitt 56 der Umfangswand 44G in Richtung der Aussparung 53G und somit in Richtung des Versteifungsprofils 60G ab.

Das Versteifungsprofil 60G weist einen runden, vorliegend kreisrunden Außenumfang auf. Eine Umfangswand 64G des Versteifungsprofils 60G bildet einen Rohrkörper aus.

Das Versteifungsprofil 60G ist an den Innenrändern oder Innenkanten der Aussparung 53G am Tragprofil 40G abgestützt. In diesen Bereichen ist zudem noch eine stoffschlüssige Verbindung, beispielsweise Verschweißung, Verlötung oder dergleichen vorteilhaft.

Weiterhin ist es vorteilhaft, wenn das Versteifungsprofil 60G sich im Innenraum 50G am Tragprofil 40G abstützt, beispielsweise in einem Kontaktbereich 74G an einem der Aussparung 53G gegenüberliegenden Wandbereich der Umfangswand 44G, insbesondere dem Umfangswandabschnitt 46G. Auch dort kann eine stoffschlüssige und/oder formschlüssige Verbindung gegeben sein, zum Beispiel anhand einer Punktschweißung, Lochschweißung, mittels Lot oder dergleichen. Weiterhin ist es möglich, dass dort eine Verschraubung, eine Niet-Verbindung oder dergleichen vorgesehen ist.

Neben der Aussparung 53G befinden sich noch schmale Abschnitte 56G, 57G der Umfangswand 46G, sodass die Aussparung 53G zwischen einem oberen und einem unteren Gurtabschnitt 54G und 55G des Tragprofils 40G verläuft. Die von der oberen Wand oder dem oberen Umfangswandabschnitt 47G winkelig abstehenden Abschnitte 56G, 57G versteifen sozusagen den oberen Umfangswandabschnitt 47G.

Nun ist es prinzipiell möglich, dass beispielsweise bei einer Stoßbelastung SB das Versteifungsprofil 60G sozusagen gequetscht oder verformt wird, wodurch sich die Aussparung 53G aufweitet und der Halt des Versteifungsprofils 60G am Tragprofil 40G geschwächt ist. Um diesem Problem zu begegnen, ist es vorteilhaft, wenn ein zusätzlicher Haltekörper an dem Tragprofil 40G angeordnet ist, beispielsweise ein Haltekörper 80. Der Haltekörper 80 weist einen Halteabschnitt 81 auf, der an der Umfangswand 44G festgelegt ist, beispielsweise mit dieser verschraubt oder stoffschlüssig mit dieser verbunden ist. Der Halteabschnitt 81 ist beispielsweise am Umfangswandabschnitt 47G angeordnet. Vom Halteabschnitt 81 erstreckt sich ein Stützabschnitt 82 in Richtung des Versteifungsprofils 60G. Beispielsweise ist der Stützabschnitt 82 winkelig zum Halteabschnitt 81. Insbesondere sind der Halteabschnitt 81 und/oder der Stützabschnitt 82 plattenartig. Das Versteifungsprofil 60G ist zwischen dem Stützabschnitt 82 und dem Umfangswandabschnitt 45G des Tragprofils 40G sandwichartig gehalten.

Bevorzugt ist es, wenn der Haltekörper 80 zudem noch zum Stützen und/oder Halten der Halterung 14G dient. So kann beispielsweise ein Haltekörper 30G der Halterung 14G mit dem Haltekörper 80, beispielsweise dessen Stützabschnitt 82, verbunden sein. Der Haltekörper 30G ist zweckmäßigerweise zwischen dem Haltekörper 80 sowie einem weiteren Haltekörper 83 gehalten, der ebenfalls am Tragprofil 40G festgelegt ist, beispielsweise mit diesem verschweißt ist.

Das im Zusammenhang mit der Trägeranordnung 10G erläuterte Konzept eines Versteifungsprofils, das in einer Längsaussparung des Tragprofils aufgenommen ist, ist auch bei der Trägeranordnung 10H realisiert.

Grundsätzlich entspricht ein Tragprofil 40H dem Tragprofil 40G. Eine Umfangswand 44H des Tragprofils 40H weist quer zur Längsachse 43 schmalere Umfangswandabschnitte 47H, 48H sowie breitere Umfangswandabschnitte 45H und 46H auf, die sich zwischen den Umfangswandabschnitten 47H, 48H erstrecken und über gerundete Kantenbereiche 49H mit diesen verbunden sind. Mithin ist also das Tragprofil 40H im Querschnitt flach-rechteckig, wobei die höhere Seite in Gebrauchslage vertikal orientiert ist.

An der vom Heck 91 des Fahrzeugs 90 abgewandten Seite weist das Tragprofil 40H eine Aussparung 53H auf, in der ein Versteifungsprofil 60H aufgenommen ist. Die Aussparung 53H erstreckt sich zwischen den Längsendbereichen 41 des Tragprofils 40H. Die Aussparung 53H und das darin aufgenommene Versteifungsprofil 60H sind so lang, dass sich das Versteifungsprofil 60H in die Querträgeraufnahme 23 der Seitenträger 12H, 13H hinein erstreckt, sodass der Querträger 11H auch im Bereich der Seitenträger 12H, 13H durch das Versteifungsprofil 60H versteift ist.

Das Versteifungsprofil 60H weist eine Umfangswand 64H auf, die einen rechteckigen Querschnitt aufweist. Seitenwandabschnitte 65H, 66H der Umfangswand 64H, die parallel zu den Umfangswandabschnitten 45H, 46H verlaufen, sind quer zur Längsachse 43 schmaler als diese Umfangswandabschnitte 45H, 46H, während parallel zu den Umfangswandabschnitten 47H, 48H verlaufende Seitenwandabschnitte 67H, 68H quer zur Längsachse 43 breiter als die Umfangswandabschnitte 47H, 48H sind.

Die Aussparung 53H wird von einem oberen und einem unteren Gurtabschnitt 54H, 55H parallel zur Längsachse 43 begrenzt, die sich zwischen den Längsendbereichen 41 des Tragprofils 40H erstrecken. Die Aussparung 53H ist näher bei dem unteren Umfangswandabschnitt 48H als bei dem oberen Umfangswandabschnitt 47H angeordnet. Dennoch steht nicht nur von dem oberen Umfangswandabschnitt 47H ein Teil 56H des Umfangswandabschnittes 45H in Richtung der Aussparung 53H und somit zum Versteifungsprofil 60H ab, sondern auch vom unteren Umfangswandabschnitt 48H ein Teil 57H des Umfangswandabschnittes 45H. Durch die einander gegenüberliegenden Teile 56H, 57H des Umfangswandabschnittes 45H ist das Versteifungsprofil 60H in der Aussparung 53H abgestützt.

Weiterhin vorteilhaft ist es, wenn das Versteifungsprofil 60H mit mindestens einer weiteren Partie seiner Umfangswand 64H am Tragprofil 40H abgestützt ist. So liegt beispielsweise der Seitenwandabschnitt 65H an dem Umfangswandabschnitt 46H im Innenraum 50H, der durch die Umfangswand 44H begrenzt ist, insbesondere flächig, an. Dort, vorzugsweise aber auch im Bereich der Aussparung 53H, ist eine stoffschlüssige Verbindung, beispielsweise Verschweißung, eine Lötverbindung, eine Verklebung oder dergleichen zwischen den Versteifungsprofil 60H und dem Tragprofil 40H vorteilhaft.

Bei der Trägeranordnung 101 ist der Querträger 11I an den konsolenartigen Seitenträgern 121, 131 gehalten. Der Querträger 11I weist ein Tragprofil 401 auf, welches in die Querträgeraufnahmen 123 eingreift bzw. dort aufgenommen ist. In diesem Bereich ist eine Verschraubung, Verschweißung oder dergleichen des Tragprofils 40I vorteilhaft. Das Tragprofil 40I ist durch ein Versteifungsprofil 60I versteift, welches das Tragprofil 40I im Wesentlichen über seine gesamte Längslänge durchsetzt, jedoch nicht bis zu den Längsenden 42 reicht. Allerdings ist auch das Tragprofil 60I so lang, dass es sich bis zum Stützbereich bzw. den Querträgeraufnahmen 123 der Seitenträger 121, 131 erstreckt und im Sinne einer Versteifung wirken kann.

Das Versteifungsprofil 601 ist in einer Aussparung 531 des Tragprofils 401 aufgenommen. Die Aussparung 531 umfasst jeweils eine Öffnung 153, 154 an einander gegenüberliegenden, in Gebrauchslage vertikal verlaufenden Umfangswandabschnitten 45I und 46I des Tragprofils 40I. Dieses hat nämlich eine im Querschnitt rechteckige Gestalt, bei der die Umfangswandabschnitte 45I, 46I durch obere und untere Umfangswandabschnitte 47I und 48I miteinander verbunden sind. Zwischen den genannten Umfangswandabschnitten können vorzugsweise gerundete Kantenbereiche 49I vorgesehen sein.

Auch das Versteifungsprofil 60I hat eine im Wesentlichen rechteckige Gestalt, wobei jedoch seine Umfangswand 64I in Gebrauchslage im Wesentlichen vertikal verlaufende Seitenwandabschnitte 65I, 66I sowie in Gebrauchslage im Wesentlichen horizontal verlaufende obere und untere Seitenwandabschnitte 67I, 68I aufweist, die sich zwischen den Seitenwandabschnitten 65I und 66I erstrecken.

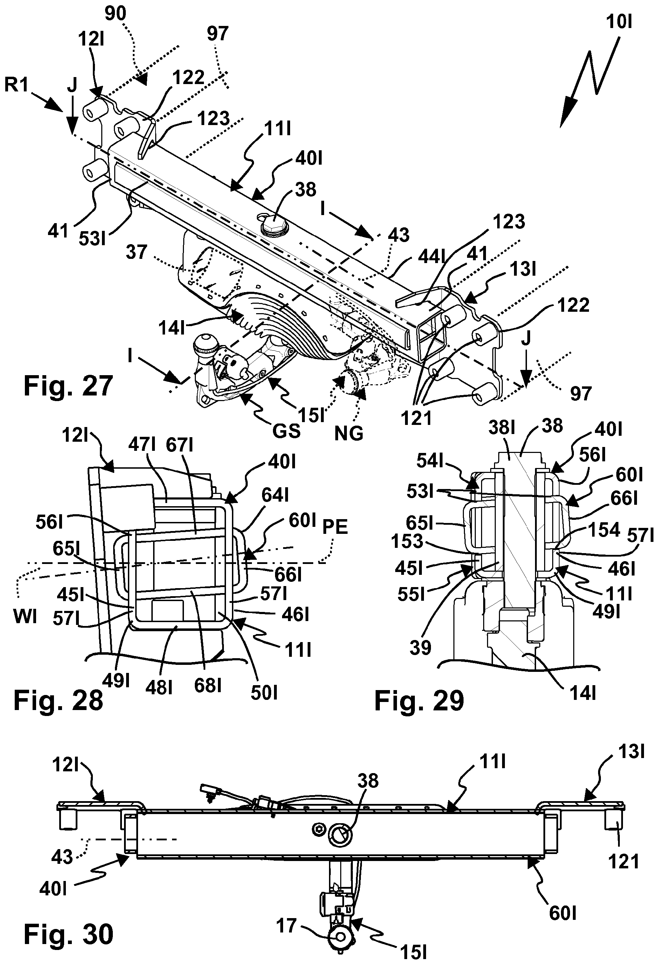

Die Halterung 141 ist anhand eines Verbindungsbolzens 38, insbesondere eines Schraubbolzens, an dem Querträger 11I gehalten. Der Verbindungsbolzen 38 durchdringt den Querträger 11 von der in Gebrauchslage oberen Wand des Tragprofils 40I, nämlich vom Umfangswandabschnitt 47I her und ist mit einem Grundkörper der Halterung 14I verschraubt, was in Figur 29 ersichtlich ist. Zur Abstützung innerhalb der innen geschachtelten Profile des Querträgers 11I, also dem Tragprofil 40I und dem Versteifungsprofil 60I, erstreckt sich eine Stützhülse 39 in den entsprechenden Ausnehmungen des Tragprofils 40I und des Versteifungsprofils 60I zwischen der dem Innenraum 50I zugewandten Innenseite des unteren Umfangswandabschnitts 48I und der freien Oberseite, also der vom Innenraum 50I abgewandten Seite, des oberen Umfangswandabschnittes 47I. Die Stützhülse 39 wird vom Verbindungsbolzen 38 durchsetzt, so dass dieser sich mit seinem Kopf 38I nicht unmittelbar an der Umfangswand 44I, also dem oberen Umfangswandabschnitt 47I des Tragprofils 40I, abstützt, sondern an der Stützhülse 39. Dies wirkt einer Quetschung oder sonstigen Verformung des Tragprofils 40I beim Einschrauben des Verbindungsbolzens 39 entgegen. Selbstverständlich wäre es aber auch möglich, dass sich der Kopf 38I unmittelbar an der Umfangswand 44I abstützt. Möglich wäre auch, dass die Stirnseite oder das freie Ende der Stützhülse 39 unmittelbar unterhalb der Umfangswand 44I angeordnet ist und diese sozusagen von unten her stützt.

Das Versteifungsprofil 60I ist zwischen oberen und unteren Gurtabschnitten 54I, 55I des Tragprofils 40I gehalten, die sich zwischen den Längsendbereichen 42 des Tragprofils 40 erstrecken und die Aussparung 53I in Gebrauchslage oben und unten begrenzen.

Von den oberen und unteren Umfangswandabschnitten 47I, 48I stehen Abschnitte 56I und 57I der Umfangswandabschnitte 45I, 46I in Richtung der Aussparung 53I winkelig ab, so dass die entsprechenden Gurtabschnitte 54I, 55I entsprechend biegesteif und belastbar sind.

Zwar sorgt bereits der Verbindungsbolzen 38 für eine stabile Verbindung zwischen dem Tragprofil 40I und dem Versteifungsprofil 60I. Zusätzliche formschlüssige und/oder stoffschlüssige Verbindungen sind jedoch vorteilhaft, so z.B. am Kantenbereich oder Randbereich der Aussparung 531, wo eine Schweißnaht, Lötverbindung, Klebeverbindung oder dergleichen zwischen dem Tragprofil 401 und dem Versteifungsprofil 601 vorgesehen sein kann.

Das Tragprofil 401 und das Versteifungsprofil 601 weisen einen flach-rechteckigen Querschnitt auf. Die längeren Seitenwände oder Umfangswände sind jedoch beim Tragprofil 401 im Wesentlichen vertikal orientiert, während sie beim Versteifungsprofil 601 im Wesentlichen horizontal orientiert sind. Nun wäre eine horizontale Ausrichtung des Versteifungsprofils 601 derart, dass die Seitenwandabschnitte 671, 681 parallel zu den Umfangsabschnitten 471 und 481 verlaufen prinzipiell möglich. Vorliegend verlaufen jedoch die Seitenwandabschnitte 671, 681 schräg geneigt bezüglich der Umfangsabschnitte 471, 481, nämlich beispielsweise um einen Winkel WI bezüglich einer zu den Umfangswandabschnitten 471 und 481 parallelen Ebene PE.

Des Weiteren erkennt man eine prinzipiell kreuzförmige Anordnung von Tragprofil 401 und Versteifungsprofil 601, wobei einander entgegengesetzte Seitenwände des Versteifungsprofils 601, nämlich die Seitenwandabschnitte 651, 661, vor den Außenumfang des Tragprofils 401 vorstehen.

Bei der Trägeranordnung 10J weist der Querträger 11J ein Tragprofil 40J auf, das eine flach-rechteckige Querschnittskontur quer zu seiner Längsachse 43 aufweist.

Eine Umfangswand 44J des Tragprofils 40J weist, z.B. in Gebrauchslage obere und untere, schmalere Umfangswandabschnitte 47J, 48J auf, die durch breitere, zum Beispiel in Gebrauchslage vertikal oder im Wesentlichen vertikal erstreckende, Umfangswandabschnitte 45J und 46J miteinander verbunden sind. Zwischen den Umfangswandabschnitten 45J-48J sind Kantenbereiche 49J vorgesehen, die vorzugsweise gerundet sind.

Das Tragprofil 40J ist an den Seitenträgern 12J, 13J abgestützt und nicht nur quer mittig, sondern auch im Bereich der Seitenträger 12J, 13J durch ein Versteifungsprofil 60J verstärkt.

Das Versteifungsprofil wirkt vorzugsweise für die breiteren Umfangswandabschnitte 45J und 46J versteifend. Beispielsweise ist das Versteifungsprofil 60J mit den Umfangswandabschnitten 45J und 46J verbunden.

Das Versteifungsprofil 60J weist einen Grundschenkel 66J auf, von dem Seitenschenkel 67J und 68J winkelig, beispielsweise etwa rechtwinkelig, abstehen, so dass sich eine insgesamt U-förmige Querschnittskontur ergibt. Die Seitenschenkel 67J, 68J verlaufen längs neben den Umfangswandabschnitten 47J, 48J des Tragprofils 40J, vorzugsweise parallel dazu, wobei Schrägneigungen ohne weiteres möglich sind. In diesem Fall könnten die Seitenschenkel 67J, 68J sozusagen V-förmig orientiert sein oder auch in ihren freien Endbereichen aufeinander zulaufen.

Die freien Endbereiche der Seitenschenkel 67J, 68J bilden Steckvorsprünge 65J. Die Steckvorsprünge 65J greifen in Steckaufnahmen 59J ein, die an der Umfangswand 44J des Tragprofils 40J vorgesehen sind, vorliegend am Umfangswandabschnitt 45J.

Die Seitenschenkel 67J, 68J sind des Weiteren durch Durchstecköffnungen 53J an der Umfangswand 44J durchgesteckt, die sich vorliegend an dem Umfangswandabschnitt 45J gegenüberliegenden Umfangswandabschnitt 46J befinden. Somit ist das Versteifungsprofil 60J in der Art einer Klammer oder Halteklammer sozusagen in das Tragprofil 40J eingesteckt und wirkt im Sinne einer Versteifung.

Zwischen dem Grundschenkel 66J und den Seitenschenkeln 67J, 68J sind Kantenbereiche, vorzugsweise gekrümmte Kantenbereiche 69J, vorgesehen.

Da von den Umfangswandabschnitten 47J, 48J Teile der winkelig abstehenden Umfangswandabschnitte 45J und 46J in Richtung des Versteifungsprofils 60J abstehen, sind dadurch obere und untere Gurtabschnitte 54J, 55J des Tragprofils 40J gebildet.

Prinzipiell möglich wäre es, dass das klammerartige Versteifungsprofil 60J noch weiter in das Tragprofil 40J eingreift, so dass beispielsweise der Grundschenkel oder der Seitenwandabschnitt 66J, insbesondere flächig, an dem Umfangswandabschnitt 46J abgestützt ist. Dort kann eine stoffschlüssige Verbindung, beispielsweise Verklebung, Verlötung oder dergleichen vorteilhaft vorgesehen sein.

Es ist vorteilhaft, wenn im Bereich der Durchtrittsöffnungen 53J und/oder der Steckaufnahmen 59J ebenfalls eine stoffschlüssige Verbindung zwischen dem Tragprofil 40J und dem Versteifungsprofil 60J vorgesehen ist, beispielsweise eine Lötverbindung, Verschweißung oder dergleichen.

Auch ein formschlüssiger Halt wäre dahingehend möglich, dass beispielsweise vor die Steckaufnahmen 59J vorstehende Abschnitte der Steckvorsprünge 65J abgewinkelt oder abgebogen werden, so dass sie beispielsweise winkelig zu den Seitenwandabschnitten 67J, 68J sind und somit ein Lösen des Versteifungsprofils 60J vom Tragprofil 40J zumindest behindern, vorzugsweise verhindern. Ferner können die Steckvorsprünge 65J in den Steckaufnahmen 59J z.B. auch anhand eines Presswerkzeugs oder Prägewerkzeugs verpresst oder verprägt sein.

Bei der Trägeranordnung 10K hat ein Tragprofil 40K, welches den Querträger 11K bildet, ebenfalls eine Versteifung, nämlich durch ein Versteifungsprofil 60K. Das Versteifungsprofil 60K ist im Querschnitt U-förmig und hat einen Grundschenkel 66K, von dem Seitenschenkel 67K, 68K winkelig, beispielsweise rechtwinkelig, abstehen.

Das Tragprofil 40K hat einen rechteckigen, vorliegend sogar quadratischen, Querschnitt mit einander gegenüberliegenden Umfangswandabschnitten 45K, 46K, die in Gebrauchslage etwa vertikal verlaufen, sowie ebenfalls einander gegenüberliegend, die vorgenannten Umfangswandabschnitte mit einander verbindenden Umfangswandabschnitten 47K, 48K, die insgesamt einen Innenraum 50K umschließen.

In den Innenraum 50K greift das Versteifungsprofil 60K mit seinen Seitenschenkeln 67K, 68K ein, die durch Durchtrittsöffnungen 53K beispielsweise an dem Umfangswandabschnitt 46K hindurch gesteckt sind und mit ihren freien Endbereichen teilweise an der Innenseite der dem Innenraum 50K zugewandten Umfangswandabschnitts 45K abstützten, zum Teil aber auch mit Steckvorsprüngen 65K in korrespondierende Steckaufnahmen 59K am Umfangswandabschnitt 45K eindringen. Dort kann eine stoffschlüssige Verbindung vorgesehen sein, aber auch eine formschlüssige Verbindung derart, dass beispielsweise die freien Endbereiche der Steckvorsprünge 65K in den korrespondierenden Steckaufnahmen 59K verpresst oder verprägt sind oder vor die Steckaufnahme 59K vorstehende Abschnitte der Steckvorsprünge 65K abgewinkelt oder umgekantet sind.

Vorteilhaft ist es, wenn der Grundschenkel 66K flächig an dem Umfangswandabschnitt 46K abgestützt ist, wobei dort zusätzlich noch eine stoffschlüssige Verbindung, beispielsweise Verschweißung oder dergleichen, vorteilhaft ist. Insgesamt stützt sich also das Versteifungsprofil 60K sowohl im Bereich des Grundschenkels 66K, als auch im Bereich der freien Endbereiche der Seitenschenkel 67K, 68K an dem Tragprofil 40K ab, was eine hohe Steifigkeit zur Folge hat.

Bei der Trägeranordnung 10L ist als Querträger 11L ein Tragprofil 40L vorgesehen, welches durch ein T-förmiges Versteifungsprofil 60 verstärkt ist. Gegenüber den vorigen Ausführungsbeispielen ist dadurch beim Versteifungsprofil eine Materialeinsparung gegeben, gleichwohl eine hohe Versteifungsqualität möglich.

Das Tragprofil 40L hat einander gegenüberliegende Umfangswandabschnitte 45L, 46L, die in Gebrauchslage im Wesentlichen vertikal verlaufen, sowie diese verbindende Umfangswandabschnitte 47L, 48L, die gegenüber den vorgenannten Umfangsabschnitten 45L, 46L schmaler sind. Mithin ergibt sich also ein schmal-rechteckiges Querschnittsprofil des Tragprofils 40L.

Das Versteifungsprofil 60L hat einen Grundschenkel 66L, von dem etwa mittig ein Seitenschenkel 67L absteht, so dass sich eine insgesamt T-förmige Querschnittskontur ergibt.

Der Grundschenkel 66L liegt zweckmäßigerweise flächig an dem Umfangswandabschnitt 46L an, wobei sein Seitenschenkel 46L eine Durchtrittsöffnung 53L an dem Umfangswandabschnitt 46L durchdringt und somit in den Innenraum 50L des Tragprofils 40L eindringt.

Dort ist der Seitenschenkel 67L teilweise an der Umfangswand 44L, nämlich am Umfangswandabschnitt 45L abgestützt, teilweise dringt er mit Vorsprüngen 65L, nämlich Steckvorsprüngen, in korrespondierende Steckaufnahmen 59L an dem Umfangswandabschnitt 45L ein.

Die Steckvorsprünge 65L sind in einer Reihenanordnung nebeneinander angeordnet und verlaufen parallel zur Längsachse 43 des Tragprofils 40 nebeneinander. Somit ist also der Seitenschenkel 67L und damit auch das Versteifungsprofil 60L entlang der Längsachse 43 an mehreren Positionen am Tragprofil 40L einerseits formschlüssig festgelegt, nämlich anhand der Steckvorsprünge 65L, andererseits abgestützt. Dadurch ergibt sich eine insgesamt sehr stabile und belastbare Konstruktion.

Vorteilhaft ist es, wenn Kontaktbereiche des Versteifungsprofils 60L mit dem Tragprofil 40L zu einer stoffschlüssigen Verbindung ausgestaltet sind, d.h. dass beispielsweise zwischen dem Grundschenkel 66L und dem Umfangswandabschnitt 46L eine Lötverbindung, Klebeverbindung, Schweißverbindung oder dergleichen vorgesehen ist. Sie ist selbstverständlich auch vorteilhaft im Bereich des freien Endbereiches des Seitenschenkels 67L, wo dieser in Kontakt mit dem Umfangswandabschnitt 45L ist. Ferner können die Steckvorsprünge 65L wie die Steckvorsprünge 65J oder 65K in den zugeordneten Steckaufnahmen 65L formschlüssig, beispielsweise durch eine Verpressung oder Prägung, eine Umkantung von vor die Steckaufnahmen 65 L vorstehenden Abschnitt oder dergleichen gehalten sein.

Der Querträger 11M der Trägeranordnung 10M weist einen gekrümmten, bogenförmigen Verlauf auf. Er erstreckt sich quer zur Fahrzeuglängsachse 95 des Fahrzeugs 92 bogenförmig um das Heck 91. Ein Tragprofil 40M des Querträgers 11M weist den entsprechenden bogenförmigen Verlauf auf, während ein das Tragprofil 40M verstärkendes Versteifungsprofil 60M mindestens eine geradlinige Wand aufweist, nämlich eine Grundwand oder einen Grundschenkel 66M. Das Versteifungsprofil 60M erstreckt sich zwischen den Seitenträgern 12M, 13M, aber nicht bis zu diesen hin. Es verstärkt insbesondere einen mittleren Versteifungsabschnitt 51 des Querträgers 11M. Ohne weiteres möglich wäre es aber, dass Versteifungsprofil 60M auch bis zu den Seitenträgern 12M, 13M vorzusehen.

Von dem Grundschenkel 66M steht ein Seitenschenkel 67M vor, der in einen Innenraum 50M des Tragprofils 40M eingreift. Der Grundschenkel 66M und der Seitenschenkel 67M bilden beispielsweise eine im Querschnitt L-förmige Konfiguration oder Gestalt. Gegenüber einer T-förmigen oder U-förmigen Ausgestaltung eines Versteifungsprofils ist das Versteifungsprofil 60M leichter.

Der Innenraum 50M des Tragprofils 40M wird von breiteren, in Gebrauchslage vertikal verlaufenden Umfangswandabschnitten 45M, 46M einer Umfangswand 44M sowie von schmaleren, in Gebrauchslage etwa horizontal verlaufenden, Umfangswandabschnitten 47M, 48M begrenzt, die die Umfangswandabschnitte 45M, 46M miteinander verbinden. Zwischen den vorgenannten Umfangswandabschnitten 45M-48M sind Kantenbereiche 49M vorgesehen, die eckig oder gekrümmt sind. Mithin hat also das Tragprofil 40M eine flach rechteckige Gestalt und ist hochstehend.

Der Seitenschenkel 67M ist durch eine Durchtrittsöffnung oder Durchstecköffnung 53M am Umfangswandabschnitt 46M durchgesteckt und dringt mit Steckvorsprüngen 65M in Steckaufnahmen 59M am Umfangswandabschnitt 45M ein. Dort kann eine stoffschlüssige Verbindung vorgesehen sein, aber auch eine formschlüssige Verbindung.

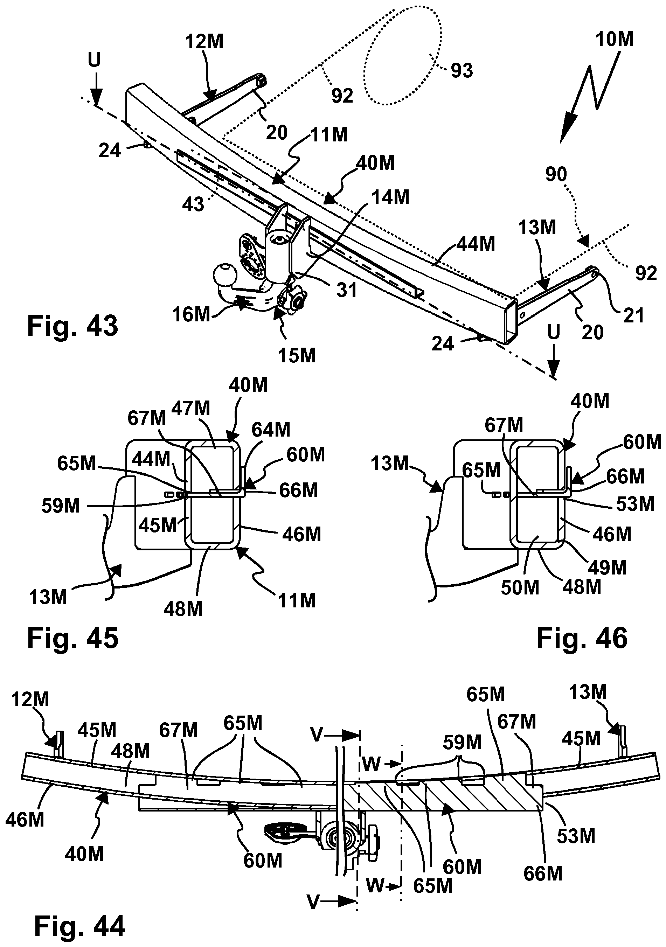

Eine freie Stirnseite der Steckvorsprünge 65M kann eine dem bogenförmigen Verlauf der Umfangswand 44M im Bereich des Umfangswandabschnitts 45M folgende Krümmungskontur aufweisen, siehe Figur 44, oder auch parallel zum Grundschenkel 66M verlaufen.

Der Grundschenkel 66M weist im Unterschied zu den gekrümmt verlaufenden Umfangswandabschnitt 46M einen geradlinigen Verlauf auf, sodass er beispielsweise im Bereich der Halterung 14M näher an der Umfangswand 44M angeordnet ist, beispielsweise an dieser abgestützt ist, während er zu den Längsenden 42 des Querträgers 11 oder des Tragprofils 40M hin einen größeren Abstand zu der Umfangswand 44M aufweist. Nahe bei der Halterung 14M kann eine formschlüssige und/oder stoffschlüssige Verbindung zwischen dem Grundschenkel 66M und dem Umfangswandabschnitt 46M vorgesehen sein, beispielsweise eine Verklebung, Verschweißung oder dergleichen. Zur formschlüssigen Verbindung oder als formschlüssige Verbindung eignet sich beispielsweise eine Anordnung mit mindestens einer Niet und/oder einer Verschraubung, einer formschlüssigen Umformung oder dergleichen.

Die Trägeranordnung 10N hat einen gekrümmt verlaufenden Querträger 11N, dessen Tragprofil 40N sich zwischen Seitenträgern 12N, 13N erstreckt, jedoch nur in einem mittleren Abschnitt und nicht bis zu den Seitenträgern 12N, 13N durch ein Verstärkungsprofil 60N verstärkt ist, wobei dies ohne weiteres möglich wäre.

Das Tragprofil 40N weist einander entgegengesetzte, in Gebrauchslage beispielsweise etwa vertikal verlaufende, Umfangswandabschnitte 45N, 46N einer Umfangswand 44N, zwischen denen sich Umfangswandabschnitte 47N, 48N erstrecken, die in Gebrauchslage zum Beispiel etwa horizontal verlaufen. Diese Ausrichtung ist jedoch nur beispielhaft zu verstehen und könnte ohne weiteres auch anders vorgesehen sein. Dies gilt auch für die bisher erläuterten Ausführungsbeispiele. Jedenfalls hat das Tragprofil 40N einen rechteckigen Querschnitt.

In einen Innenraum 50N, der durch die Umfangswand 44N begrenzt ist, greifen Seitenschenkel 67N, 68N des Versteifungsprofils 60N ein, die von einem Grundschenkel 66N des Versteifungsprofils 60N abstehen. An den freien Endbereichen der Seitenschenkel 67N, 68N sind Steckvorsprünge 65N vorgesehen, die in Steckaufnahmen 59N an dem Umfangswandabschnitt 45N eingreifen. Zwischen den Steckvorsprüngen 65N stützen sich die Seitenschenkel 67N, 68N an der dem Innenraum 50N zugewandten Seite des Umfangswandabschnittes 45N ab. Im Gegensatz zu dem Umfangswandabschnitt 46N verläuft der Grundschenkel 66N des Versteifungsprofils 60N geradlinig, d. h. der Grundschenkel 66N hat unterschiedliche Abstände entlang des Krümmungsverlaufs zu dem Umfangswandabschnitt 46N.

Ein in Figur 51 dargestellter Lastenträger 300 weist ein Tragegestell 310 auf, welches durch Versteifungsprofile 360 versteifte Tragprofile 340 aufweist. Die Tragprofile 340 bilden Längsträger 311 des Tragegestells 310, die durch einen Querträger 312 und einen weiteren Querverbinder oder Querträger 313 an ihren jeweiligen Längsendbereichen miteinander verbunden sind. Der Querträger 312 und die Längsträger 311 bilden eine U-förmige Konfiguration, die zum Auflegen einer Last geeignet ist, beispielsweise zum Aufstellen von Fahrrädern.

An den Längsträgern 311 sind Tragelemente 382, beispielsweise Fahrradträgerrinnen, zum Abstellen von Rädern von Fahrrädern vorgesehen. Die Tragelemente 382 können zwischen der in der Zeichnung dargestellten Gebrauchsstellung, bei der sie von den Längsträgern 311 abstehen, in eine Nichtgebrauchsstellung, bei der sie zwischen den Längsträgern 311 angeordnet sind, beispielsweise zwischen diese eingeschwenkt sind, verstellt werden.

An dem Querverbinder 313 sind noch Leuchten 381 angeordnet, vorzugsweise schwenkbar gelagert, sodass auch diese zwischen einer in der Zeichnung dargestellten Gebrauchsstellung und einer näher zu den Längsträgern 311 hin verstellten Nichtgebrauchsstellung oder Packstellung verstellbar sind.

Vom Tragegestell 310 steht weiterhin ein Tragbügel oder Stützbügel 383 ab, an dem die auf dem Tragegestell 310 abgestellte Fahrräder befestigt werden können, beispielsweise anhand eines Halters 384.

Die Tragprofile 340 sind Hohlprofile oder Rohrkörper, in deren Innenraum Versteifungsprofile 360 angeordnet sind, beispielsweise ebenfalls Rohrkörper. Eine Außenumfangskontur der Versteifungsprofile 360 entspricht zumindest partiell einer Innenumfangskontur der Umfangswände der Tragprofile 340, sodass sich die Profile 340, 360 aneinander abstützen können.

Ohne weiteres könnte auch eine derartige Versteifung durch ein Versteifungsprofil an dem Querträger 312 vorgesehen sein, an dem beispielsweise eine Kopplungseinrichtung 380 zum Ankuppeln an eine Anhängekupplung, zum Beispiel eine der Anhängekupplungen 15A-15N, angeordnet ist. Auch der Querträger 312 ist beim Fahrbetrieb stark belastet. So kann am Außenumfang des Querträgers 312 beispielsweise ein Versteifungsprofil in der Art des Versteifungsprofils 60 A angeordnet sein.

## Patentansprüche

1. Trägeranordnung für ein Heck (91) eines Fahrzeugs (90), wobei die Trägeranordnung (10) einen Bestandteil eines an dem Fahrzeug (90) lösbar befestigbaren, insbesondere vor das Heck (91) des Fahrzeugs (90) bei Gebrauch vorstehenden, Lastenträgers (300) oder einen Bestandteil einer an einem Heck (91) einer Karosserie (92) des Fahrzeugs (90) angeordneten oder befestigbaren Kupplungseinrichtung bildet, wobei die Trägeranordnung (10) bei dem Lastenträger (300) zum Auflegen einer Last vorgesehen ist und bei der Kupplungseinrichtung eine Halterung (14) für eine Anhängekupplung (15) zum Anhängen eines Anhängers (100) an das Fahrzeug (90) oder für ein Lastenträger-Kupplungsteil zum lösbaren Ankuppeln eines Lastenträgers an das Fahrzeug (90) aufweist, wobei die Trägeranordnung (10) mindestens ein Tragprofil (40) aufweist, das eine Tragprofil-Umfangswand (44) mit zueinander winkeligen und/oder um die Längsachse (43) des mindestens einen Tragprofils (40) gekrümmt verlaufenden und einen Innenraum (50) des mindestens einen Tragprofils (40) bezüglich der Längsachse (43) umfangsseitig begrenzenden Tragprofil-Umfangswandabschnitten (45-48) aufweist, wobei das mindestens eine Tragprofil (40) zumindest entlang eines Teils seiner Längsachse (43) in einem Versteifungsabschnitt (51) durch mindestens ein Versteifungsprofil (60) versteift ist, das zueinander winkelige und/oder um eine Versteifungsprofil-Längsachse des Versteifungsprofils (60) gekrümmt verlaufende Versteifungsprofil-Wandabschnitte (66) aufweist und sich zur Versteifung des mindestens einen Tragprofils (40) an der Tragprofil-Umfangswand des mindestens einen Tragprofils (40) abstützt, wobei das mindestens eine Versteifungsprofil (60) in den Innenraum (50) des mindestens einen Tragprofils (40) eingreift oder das mindestens eine Tragprofil (40) in einen Versteifungsprofil-Innenraum des mindestens einen Versteifungsprofils (60) eingreift, der in einem sich um die Längsachse (43) des mindestens einen Tragprofils (40) erstreckenden Umfangswinkelbereich von mehr als 180° durch die Versteifungsprofil-Wandabschnitte (66) begrenzt ist, **dadurch gekennzeichnet, dass** bei einer Komponente von Tragprofil (40) oder Versteifungsprofil (60) eine Aussparung vorhanden ist, in die die andere Komponente von Tragprofil (40) oder Versteifungsprofil (60) eingreift.

2. Trägeranordnung nach Anspruch 1, **dadurch gekennzeichnet, dass** die Umfangswände des Tragprofils (40) und/oder die Versteifungsprofil-Wandabschnitte (66) des Versteifungsprofils (60) in dem Versteifungsabschnitt (51) um die Längsachse (43) herum vollständig und/oder ringförmig geschlossen sind und/oder eine um die Längsachse (43) des Tragprofils (40) oder des Versteifungsprofils (60) ringförmig geschlossene Umfangswand (44) bilden und/oder dass das Versteifungsprofil (60) unverlierbar an dem Tragprofil (40) anhand einer unmittelbaren und schraubenlosen Verbindung mit dem Tragprofil (40) und der Abstützung des Versteifungsprofils (60) an dem Tragprofil (40) gehalten ist.

3. Trägeranordnung nach Anspruch 1 oder 2, **dadurch gekennzeichnet**, das Versteifungsprofil (60) und/oder das Tragprofil (40), insbesondere im Bereich des Versteifungsabschnitts (51), einen runden Querschnitt und/oder einen polygonalen Querschnitt, insbesondere einen rechteckigen oder quadratischen Querschnitt, aufweisen und/oder dass mindestens ein Versteifungsprofil-Wandabschnitt (66) flächig an der Umfangswand (44) des Tragprofils (40) anliegt und/oder dass das Versteifungsprofil (60) vollständig im Innenraum (50) des Tragprofils (40) aufgenommen ist und nicht vor die Umfangswand (44) des Tragprofils (40) vorsteht und/oder dass das Versteifungsprofil (60) in dem Versteifungsabschnitt (51) vor eine Außenumfangskontur des Tragprofils (40) an mindestens einer Seite, insbesondere an einander entgegengesetzten Seiten, vorsteht und/oder dass sich das Versteifungsprofil (60) parallel oder im Wesentlichen parallel zur Längsachse (43) des Tragprofils (40) neben mindestens einem Gurtabschnitt (54G, 55G) des Tragprofils (40) erstreckt, insbesondere zwischen zwei derartigen Gurtabschnitten (54G, 55G) angeordnet ist, wobei der mindestens eine Gurtabschnitt (54G, 55G) mindestens zwei quer zur Längsachse (43) zueinander winkelige und/oder gekrümmte, insbesondere im Querschnitt U-förmig oder L-förmig oder V-förmig angeordnete, und sich entlang der Längsachse (43) erstreckende Tragprofil-Umfangswandabschnitte (45-48) aufweist.

4. Trägeranordnung nach einem der vorhergehenden Ansprüche, **dadurch gekennzeichnet, dass** das Versteifungsprofil (60) einen Grundschenkel (66J) und mindestens einen von dem Grundschenkel (66J) abstehenden Seitenschenkel (67J, 68J) (282) aufweist und/oder dass das Versteifungsprofil (60) einen C-förmigen, U-förmigen, V-förmigen, E-förmigen, W-förmigen, T-förmigen oder L-förmigen Querschnitt aufweist und/oder dass ein Grundschenkel (66J) des mindestens einen Versteifungsprofils (60) außerhalb des Innenraums (50) des Tragprofils (40) angeordnet ist und mindestens ein von dem Grundschenkel (66J) abstehender Schenkel (67J, 68J) des mindestens einen Versteifungsprofils (60), insbesondere alle von dem Grundschenkel (66J) abstehende Schenkel (67J, 68J), in den Innenraum (50) des Tragprofils (40) eingreift, wobei vorteilhaft vorgesehen ist, dass sich der Grundschenkel (66J) des mindestens einen Versteifungsprofils (60) an der Umfangswand (44) des mindestens einen Tragprofils (40) abstützt und/oder mit der Umfangswand (44) des Tragprofils (40) stoffschlüssig und/oder formschlüssig verbunden ist.

5. Trägeranordnung nach einem der vorhergehenden Ansprüche, **dadurch gekennzeichnet, dass** in Gebrauchslage der Trägeranordnung (10) eine vertikale Höhenerstreckung des Tragprofils (40) quer zu seiner Längsachse (43) größer als eine vertikale Höhenerstreckung des Versteifungsprofils (60) und/oder ein Abstand zwischen oberen und unteren Tragprofil-Umfangswandabschnitten (45-48) des Tragprofils (40) größer als ein Abstand zwischen oberen und unteren Versteifungsprofil-Wänden ist und/oder dass in Gebrauchslage der Trägeranordnung (10) eine horizontale Tiefenerstreckung des Tragprofils (40) quer zu seiner Längsachse (43) kleiner als eine horizontale Tiefenerstreckung des Versteifungsprofils (60) und/oder ein Abstand zwischen horizontal am weitesten voneinander entfernten Tragprofil-Umfangswandabschnitten (45-48) des Tragprofils (40) kleiner als ein Abstand zwischen horizontal am weitesten voneinander entfernten Versteifungsprofil-Wänden ist.

6. Trägeranordnung nach einem der vorhergehenden Ansprüche, **dadurch gekennzeichnet, dass** mindestens ein Längsende (42), insbesondere beide Längsenden (42) des Tragprofils (40) nicht durch das Versteifungsprofil (60) versteift sind und/oder dass das Tragprofil (40) im Wesentlichen über seine gesamte Länge durch das Versteifungsprofil (60) versteift ist und/oder dass das Tragprofil (40) im Bereich seiner durch die Verbindung mit einer weiteren Komponente der Trägeranordnung, insbesondere einem Seitenträger (12, 13) zur Verbindung mit dem Fahrzeug (90) und/oder der Halterung (14) für die Anhängekupplung (15) oder das Lastenträger-Kupplungsteil und/oder einem weiteren Profilteil, durch das Versteifungsprofil (60) versteift ist.

7. Trägeranordnung nach einem der vorhergehenden Ansprüche, **dadurch gekennzeichnet, dass** das Tragprofil (40) und das Versteifungsprofil (60) aus unterschiedlichen Materialien bestehen, insbesondere das Versteifungsprofil (60) aus einem höherfesteren Material als das Tragprofil (40) besteht, und/oder dass das Tragprofil (40) und/oder das Versteifungsprofil (60) aus Metall, insbesondere aus Stahl, oder Kunststoff, insbesondere faserverstärktem Kunststoff, besteht und/oder dass das Versteifungsprofil (60) mit dem Tragprofil (40) formschlüssig und/oder kraftschlüssig, insbesondere in einem Presssitz, und/oder stoffschlüssig, insbesondere durch eine Schweißverbindung und/oder eine Klebeverbindung und/oder eine Lötverbindung, verbunden ist.

8. Trägeranordnung nach einem der vorhergehenden Ansprüche, **dadurch gekennzeichnet, dass** das Versteifungsprofil (60) oder das Tragprofil (40) mindestens eine quer zur Längsachse (43) verlaufende Vertiefung, insbesondere eine Kerbe oder einen Ausschnitt aufweist, in die ein insbesondere durch Verformung hergestellter und quer zur Längsachse (43) verlaufender Haltevorsprung des jeweils anderen Profils, des Tragprofils (40) oder des Versteifungsprofils (60), eingreift, und/oder dass das Versteifungsprofil (60) mit dem Tragprofil (40) anhand einer Umformung mindestens eines der Profile formschlüssig miteinander verbunden sind, die im aneinander angeordneten Zustand der Profile durchgeführt ist, und/oder dass das Versteifungsprofil (60) mit dem Tragprofil (40) anhand einer Innenhochdruckumformung, insbesondere einer Hydroformung, und/oder einer Krümmungsverformung, bei der die aneinander angeordneten Profile gemeinsam verformt werden, sodass die Profile eine Bogenform oder jeweils zwei zueinander winkelige Schenkel aufweisen, verbunden ist.

9. Trägeranordnung nach einem der vorhergehenden Ansprüche, **dadurch gekennzeichnet, dass** mindestens ein Zwischenraum zwischen dem Versteifungsprofil (60) und dem Tragprofil (40) und/oder mindestens ein Innenraum von Versteifungsprofil (60) oder Tragprofil (40) mit einem schaumartigen Material und/oder elastischen Material gefüllt ist.

10. Trägeranordnung nach einem der vorhergehenden Ansprüche, **dadurch gekennzeichnet, dass** das Tragprofil (40) und das Versteifungsprofil (60) anhand mindestens eines von Tragprofil (40) und Versteifungsprofil (60) separaten Haltekörpers (80) aneinandergehalten sind, wobei vorteilhaft vorgesehen ist, dass der Haltekörper (80) mit der Halterung (14) für die Anhängekupplung (15) oder das Lastenträger-Kupplungsteil verbunden ist oder durch die Halterung (14) gebildet ist und/oder dass der Haltekörper (80) die Anordnung von Tragprofil (40) und Versteifungsprofil (60) in dem Versteifungsabschnitt (51) zumindest partiell einhaust oder ein Gehäuse bildet und/oder dass der Haltekörper (80) eine Klammer umfasst, der Teilabschnitte mindestens eines von Tragprofil (40) oder Versteifungsprofil (60) miteinander verklammert.

11. Trägeranordnung nach einem der vorhergehenden Ansprüche, **dadurch gekennzeichnet, dass** das Tragprofil (40) und das Versteifungsprofil (60) durch mindestens eine Paarung aus einer Steckaufnahme (59J) und einem Steckvorsprung (65J) formschlüssig miteinander verbunden sind, wobei der Steckvorsprung (65J) in die mindestens eine Steckaufnahme (59J) eingreift, wobei vorteilhaft vorgesehen ist, dass der Steckvorsprung (65J) in der Steckaufnahme (59J) stoffschlüssig mit dem Tragprofil (40) verbunden, insbesondere verschweißt, ist und/oder dass sich das Versteifungsprofil (60) an dem Tragprofil (40), insbesondere an einer dem Innenraum (50) des Tragprofils (40) zugewandten Innenseite der Umfangswand (44), neben dem Steckvorsprung (65J) abstützt.

12. Trägeranordnung nach einem der vorhergehenden Ansprüche, **dadurch gekennzeichnet, dass** das Versteifungsprofil (60) oder das Tragprofil (40) eine Reihenanordnung in einer insbesondere geradlinigen Reihenlinie nebeneinander angeordneter Steckvorsprünge (65J) aufweisen, die in eine entlang der Reihenlinie verlaufende, langgestreckte Steckaufnahme (59J) oder in in einer Reihenanordnung entlang der Reihenlinie angeordneten Steckaufnahmen (59J) eingreifen, wobei die Steckaufnahme (59J) oder die Steckaufnahmen (59J) am jeweils anderen von Versteifungsprofil (60) und Tragprofil (40) angeordnet sind, wobei vorteilhaft vorgesehen ist, dass sich das Versteifungsprofil (60) zwischen den Steckvorsprüngen an dem Tragprofil (40), insbesondere an einer dem Innenraum (50) des Tragprofils (40) zugewandten Innenseite der Umfangswand (44), abstützt.

13. Trägeranordnung nach einem der vorhergehenden Ansprüche, **dadurch gekennzeichnet, dass** mindestens eine Stirnseite (71) des Versteifungsprofils (60) bezüglich der Längsachse (43) des Tragprofils (40) einen Schrägverlauf und/oder eine Krümmung zur Verringerung einer Kerbspannung zwischen dem Tragprofil (40) und dem Versteifungsprofil (60) aufweist und/oder dass das Versteifungsprofil (60) und das Tragprofil (40) an zumindest einem Bereich einen Abstand zueinander aufweisen, der bei einer Verformung des Versteifungsprofils (60) und/oder des Tragprofils (40) bei einer insbesondere unfallbedingten Stoßbelastung (SB) verkleinert wird und/oder dass das Versteifungsprofil (60) sich bei einer insbesondere unfallbedingten Stoßbelastung (SB) im Sinne eines Verkeilens an dem Tragprofil (40) abstützt.

14. Trägeranordnung nach einem der vorhergehenden Ansprüche, **dadurch gekennzeichnet, dass** sie einen sich in Gebrauchslage quer zu einer Fahrzeuglängsachse (95) des Fahrzeugs (90) erstreckenden Querträger (11) aufweist, dessen Längsendbereiche (41) an zur Verbindung mit dem Fahrzeug (90) vorgesehenen Seitenträgern (12, 13) der Trägeranordnung (10) gehalten sind, wobei vorteilhaft vorgesehen ist, dass der Querträger (11) und/oder die Seitenträger (12, 13) das durch das Versteifungsprofil (60) verstärkte Tragprofil (40) aufweisen oder dadurch gebildet sind und/oder dass das Versteifungsprofil (60) in mindestens einem Verbindungsbereich des Querträgers (11) mit einem der Seitenträger (12, 13) oder beiden Seitenträgern (12, 13) an dem Tragprofil (40) vorhanden ist.

15. Trägeranordnung nach einem der vorhergehenden Ansprüche, **dadurch gekennzeichnet, dass** das Versteifungsprofil (60) ein von einer Verbindungskomponente zur Verbindung des Tragprofils (40) mit einem weiteren Bauteil, insbesondere der Halterung (14) und/oder einem weiteren Profil der Trägeranordnung (10), separates Bauteil ist und/oder dass das Tragprofil (40) und/oder das Versteifungsprofil (60) als ein einstückiger Körper ausgestaltet ist und/oder dass die Tragprofil-Umfangswand (44) und/oder die Versteifungsprofil-Wandabschnitte (66) jeweils einstückig und/oder aus einem einzigen Rohling hergestellt sind und/oder dass das Tragprofil (40) und/oder das Versteifungsprofil (60) eine lang gestreckte Gestalt aufweisen, wobei ihre Länge bezüglich der jeweiligen Längsachse (43, 63) mindestens doppelt so groß, vorzugsweise mindestens dreimal oder viermal oder fünfmal oder zehnmal, so groß wie ihr Durchmesser ist, und/oder dass das Versteifungsprofil (60), insbesondere eine Grundwand oder ein Grundschenkel (66J) des Versteifungsprofils (60), an einer im am Fahrzeug (90) montierten Zustand des Tragprofils (40) von dem Heck (91) abgewandten Seite des Tragprofils (40) angeordnet ist und/oder dass eine Grundwand oder ein Grundschenkel (66J) des Versteifungsprofils (60) in Gebrauchslage oder vertikal oder im Wesentlichen vertikal verläuft und/oder dass das Versteifungsprofil (60) nicht zur Verbindung zweier Teilabschnitte, insbesondere zueinander winkeliger Teilabschnitte, des Tragprofils (40) und/oder nicht zur Verbindung eines Querträgers (11) mit einem Seitenträger (12, 13) der Trägeranordnung vorgesehen oder angeordnet ist und/oder dass das Versteifungsprofil (60) nicht vor eine in Gebrauchslage obere Seite und/oder untere Seite des Tragprofils (40) vorsteht und/oder dass das Tragprofil (40) vor einander entgegengesetzte Längsenden des Versteifungsprofils (60) vorsteht und/oder dass das Versteifungsprofil (60) ausschließlich zur Versteifung des Tragprofils (40) dient und/oder nicht zur Verbindung des Tragprofils (40) mit einer anderen Komponente, beispielsweise mit der Halterung (14) oder mit dem Fahrzeug (90) dient.

## Claims

1. Support assembly for a rear end (91) of a vehicle (90), wherein the support assembly (10) forms a component of a load carrier (300), releasably attachable to the vehicle (90), in particular projecting from the rear end (91) of the vehicle (90) in use, or forms a component of a coupling device mounted on or attachable to a rear end (91) of a body (92) of the vehicle (90), wherein the support assembly (10), in the case of the load carrier (300), is provided for the placing of a load, and in the case of the coupling device has a mounting (14) for a trailer coupling (15) for attaching a trailer (100) to the vehicle or for a load carrier coupling part for releasable coupling of a load carrier to the vehicle (90), wherein the support assembly (10) has at least one support profile (40) which has a support profile peripheral wall (44) with support profile peripheral wall sections (45-48) at an angle to one another and/or running in a curve around the longitudinal axis (43) of the support profile or profiles (40) and bounding on the periphery an interior (50) of the support profile or profiles (40) with respect to the longitudinal axis (43), whereby the support profile or profiles (40) is or are reinforced in a reinforcing section (51), at least along a part of its or their longitudinal axis (43), by at least one reinforcing profile (60), which has reinforcing profile wall sections (66) running at an angle to one another and/or curved around a reinforcing profile longitudinal axis of the reinforcing profile (60), and resting on the support profile peripheral wall of the support profile or profiles (40) to reinforce the support profile or profiles (40), wherein the reinforcing profile or profiles (60) engages or engage in the interior (50) of the support profile or profiles (40) or the support profile or profiles (40) engages or engage in a reinforcing profile interior of the reinforcing profile or profiles (60) which is bounded by the reinforcing profile wall sections (66) in a peripheral angle range of more than 180° extending around the longitudinal axis (43) of the support profile or profiles (40), **characterised in that**, in the case of a component of the support profile (40) or the reinforcing profile (60) there is a recess in which the other component of the support profile (40) or reinforcing profile (60) engages.

2. Support assembly according to claim 1, **characterised in that** the peripheral walls of the support profile (40) and/or the reinforcing profile wall sections (66) of the reinforcing profile (60) are completely closed around the longitudinal axis (43) and/or annularly in the reinforcing section (51), and/or form an annular closed peripheral wall (44) around the longitudinal axis (43) of the support profile (40) or the reinforcing profile (60) and/or **in that** the reinforcing profile (60) is held captive to the support profile (40) with the aid of direct and screwless connection with the support profile (40) and the support of the reinforcing profile (60) on the support profile (40).

3. Support assembly according to claim 1 or 2, **characterised in that** the reinforcing profile (60) and/or the support profile (40) have in particular in the area of the reinforcing section (51) a round cross-section and/or a polygonal cross-section, in particular a rectangular or square cross-section, and/or **in that** at least one reinforcing profile wall section (66) lies flat against the peripheral wall (44) of the support profile (40) and/or **in that** the reinforcing profile (60) is held completely in the interior (50) of the support profile (40) and does not extend beyond the peripheral wall (44) of the support profile (40) and/or **in that** the reinforcing profile (60) in the reinforcing section (51) protrudes from an outer peripheral contour of the support profile (40) on at least one side, in particular on opposite sides, and/or in that the reinforcing profile (60) extends parallel or substantially parallel to the longitudinal axis (43) of the support profile (40) next to at least one tie section (54G, 55G) of the support profile (40), in particular being arranged between two such tie sections (54G, 55G), wherein the tie section or tie sections (54G, 55G) has or have at least two support profile peripheral wall sections (45-48) arranged transversely to the longitudinal axis (43), at an angle to one another and/or curved, in particular U-shaped, L-shaped or V-shaped and extending along the longitudinal axis (43).

4. Support assembly according to any of the preceding claims, **characterised in that** the reinforcing profile (60) has a base leg (66J) and at least one side leg (67J, 68J) (282) sticking out from the base leg (66J) and/or that the reinforcing profile has a C-shaped, U-shaped, V-shaped, E-shaped, W-shaped, T-shaped or L-shaped cross-section and/or **in that** a base leg (66J) of the reinforcing profile or reinforcing profiles (60) is arranged outside the interior (50) of the support profile (40), and at least one leg (67J, 68J) of the reinforcing profile (60) extending away from the base leg (66J), in particular all legs (67J, 68J) extending away from the base leg (66J), engages or engage in the interior (50) of the support profile (40), whereby it is advantageously provided that the base leg (66J) of the reinforcing profile or reinforcing profiles (60) rests on the peripheral wall (44) of the support profile (40) and/or is joined to the peripheral (44) wall of the support profile (40) by material bonding and/or form-fitting.

5. Support assembly according to any of the preceding claims, **characterised in that** in the position of use of the support assembly (10), a vertical extent in height of the support profile (40) transversely to its longitudinal axis (43) is greater than a vertical extent of the reinforcing profile (60) and/or a distance between upper and lower support profile peripheral wall sections (45-48) of the support profile (40) is greater than a distance between upper and lower reinforcing profile walls and/or **in that** in the position of use of the support assembly (10), a horizontal extent in depth of the support profile (40) transversely to its longitudinal axis (43) is less than a horizontal extent in depth of the reinforcing profile (60) and/or a distance between support profile peripheral wall sections (45-48) of the support profile (40) which are horizontally furthest removed from one another is less than a distance between reinforcing profile walls horizontally furthest removed from one another.

6. Support assembly according to any of the preceding claims, **characterised in that** at least one longitudinal end (42), in particular both longitudinal ends (42) of the support profile (40) are not reinforced by the reinforcing profile (60) and/or that the support profile (40) is reinforced by the reinforcing profile (60) over substantially its entire length and/or **in that** the support profile (40) is reinforced by the reinforcing profile (60) in the area of its connection with a further component of the support assembly, in particular a side member (12, 13) for connection with the vehicle (90) and/or the mounting (14) for the trailer coupling (15) or the load carrier coupling part and/or another profile.

7. Support assembly according to any of the preceding claims, **characterised in that** the support profile (40) and the reinforcing profile (60) are made of the same material or of different materials, in particular the reinforcing profile (60) is made of a higher-strength material than the support profile (40), and/or that the support profile (40) and/or the reinforcing profile (60) are or is made of metal, in particular of steel, or of plastic, in particular fibre-reinforced plastic, and/or **in that** the reinforcing profile (60) is joined to the support profile (40) by form-fitting and/or force-fitting, in particular in a press fit, and/or by material bonding, in particular by a welded joint and/or an adhesive bond and/or a soldered connection.

8. Support assembly according to any of the preceding claims, **characterised in that** the reinforcing profile (60) or the support profile (40) has at least one recess running transversely to the longitudinal axis (43), in particular a notch or a cut-out, in which there engages a holding projection, in particular produced by deformation and running transversely to the longitudinal axis (43), of the respective other profile, the support profile (40)or the reinforcing profile (60) and/or **in that** the reinforcing profile (60) and the support profile (40) are form-fitted to one another with the aid of forming of at least one of the profiles which is carried out with the profiles fitted together and/or **in that** the reinforcing profile (60) is joined to the support profile (40) with the aid of internal high-pressure forming, in particular hydroforming, and/or curvature deformation in which the profiles fitted together are deformed together, so that the profiles have a curved shape or in each case two legs at an angle to one another.

9. Support assembly according to any of the preceding claims, **characterised in that** at least one space between the reinforcing profile (60) and the support profile (40) and/or at least one interior space of the reinforcing profile (60) or the support profile (40) is filled with a foam-like material and/or elastic material.

10. Support assembly according to any of the preceding claims, **characterised in that** the support profile (40) and the reinforcing profile (60) are held together with the aid of at least one holding body (80) separate from the support profile (40) and the reinforcing profile (60), whereby it is advantageously provided that the holding body (80) is connected to the mounting (14) for the trailer coupling (15) or the load carrier coupling part, or is formed by the mounting (14) and/or that the holding body (80) at least partly encases the arrangement of support profile (40) and reinforcing profile (60) in the reinforcing section (51) or may form a housing and/or that the holding body (80) comprises a clip, which clamps together at least one of the support profile (40) or the reinforcing profile (60).

11. Support assembly according to any of the preceding claims, **characterised in that** the support profile (40) and the reinforcing profile (60) are positively joined to one another by at least one pair of a plug-in location (59J) and a plug-in projection (65J), wherein the plug-in projection (65J) engages in the plug-in location or locations (59J), whereby it is advantageously provided that the plug-in projection (65J) fitted in the plug-in location (59J) is joined by material bonding to the support profile (40), in particular by welding, and/or **in that** the reinforcing profile (60) rests on the support profile (40), in particular on an inner side of the peripheral wall (44) facing the interior (50) of the support profile (40), next to the plug-in projection (65J).

12. Support assembly according to any of the preceding claims, **characterised in that** the reinforcing profile (60) or the support profile (40) have a row arrangement in an array line, in particular straight, of plug-in projections (65J) arranged side-by-side, which engage in an elongated plug-in location (59J) running along the array line or in plug-in locations (59J) provided in a row arrangement along the array line, wherein the plug-in location (59J) or plug-in locations (59J) are provided on the respective other of reinforcing profile (60) and support profile (40), whereby it is advantageously provided that the reinforcing profile (60) rests on the support profile (40) between the plug-in projections, in particular on an inner side of the peripheral wall (44) facing the interior (50) of the support profile (40).

13. Support assembly according to any of the preceding claims, **characterised in that** at least one end face (71) of the reinforcing profile (60) has, relative to the longitudinal axis (43) of the support profile (40), an inclined course and/or a curvature to reduce notch stress between the support profile (40) and the reinforcing profile (60) and/or **in that** the reinforcing profile (60) and the support profile (40) in at least one area are at a distance from one another in which deformation of the reinforcing profile (60) and/or the support profile (40) is reduced under impact loading (SB), in particular due to an accident and/or that the reinforcing profile (60) is supported on the support profile (40) by wedging, in the event of an impact loading (SB), in particular caused by an accident.

14. Support assembly according to any of the preceding claims, **characterised in that** it has a cross-member (11), extending in the position of use transversely to a vehicle longitudinal axis (95) of the vehicle (90), which has longitudinal end sections (41) held on side members (12, 13) of the support assembly (10) provided for connection to the vehicle (90), whereby it is advantageously provided, that the cross-member (11) and/or the side members (12, 13) have or are formed by the support profile (40) reinforced by the reinforcing profile (60) and/or **in that** the reinforcing profile (60) is connected to the support profile (40) in at least one connection zone of the cross-member (11) by one of the side members (12, 13) or both side members (12, 13).

15. Support assembly according to any of the preceding claims, **characterised in that** the reinforcing profile (60) is a separate component from a component provided for connection of the support profile (40) to another component, in particular the mounting (14) and/or another profile of the support assembly (10) and/or **in that** the support profile (40) and/or the reinforcing profile (60) are designed as single-piece bodies and/or that the support profile peripheral wall (44) and/or the reinforcing profile wall sections (66) are in each case in one piece and/or made from a single blank and/or **in that** the support profile (40) and/or the reinforcing profile (60) have an elongated shape, wherein their length relative to the respective longitudinal axis (43, 63) is at least twice as large, preferably at least three times, four times, five times, eight times or ten times as large as their diameter, and/or **in that** the reinforcing profile (60), in particular a base wall or a base leg (66J) of the reinforcing profile (60), is fitted to a side of the support profile (40) facing away from the rear end (91), when the support profile (40) is mounted on the vehicle (90) and/or **in that** a base wall or a base leg (66J) of the reinforcing profile (60) run vertically or substantially vertically in the position of use and/or **in that** the reinforcing profile (60) is not provided or arranged for the connection of two part sections, in particular part sections of the support profile (40) at an angle to one another and/or not provided or arranged for connecting a cross-member (11) to a side member (12, 13) of the support assembly, and/or **in that** the reinforcing profile (60) does not protrude from an upper side and/or not from a bottom side of the support profile (40) in the position of use and/or **in that** the support profile (40) protrudes from opposite longitudinal ends of the reinforcing profile (60) and/or **in that** the reinforcing profile (60) is used solely for reinforcing the support profile (40) and/or is not used for connecting the support profile (40) to another component, for example the mounting (14) or the vehicle (90).

## Revendications

1. Ensemble de support pour une partie arrière (91) d'un véhicule (90), dans lequel l'ensemble de support (10) fait partie intégrante d'un support de charges (300) pouvant être fixé de manière amovible sur le véhicule (90), en particulier faisant saillie de la partie arrière (91) du véhicule (90) lors de l'utilisation ou fait partie intégrante d'un dispositif d'attelage disposé ou pouvant être fixé sur une partie arrière (91) d'une carrosserie (92) du véhicule (90), dans lequel l'ensemble de support (10) est prévu dans le cas du support de charges (300) pour déposer une charge et présente, dans le cas du dispositif d'attelage, une fixation (14) pour un attelage de remorque (15) destiné à atteler une remorque (100) au véhicule (90) ou pour une partie d'attelage de support de charges pour atteler de manière amovible un support de charges au véhicule (90), dans lequel l'ensemble de support (10) présente au moins un profil porteur (40), qui présente une paroi périphérique (44) de profil porteur avec des sections de paroi périphériques (45-48) de profil porteur formant un angle les unes par rapport aux autres et/ou s'étendant de manière incurvée autour de l'axe longitudinal (43) de l'au moins un profil porteur (40) et délimitant côté périphérique un espace intérieur (50) de l'au moins un profil porteur (40) par rapport à l'axe longitudinal (43), dans lequel l'au moins un profil porteur (40) est raidi dans une section de raidissement (51) au moins le long d'une partie de son axe longitudinal (43) par un au moins un profil de raidissement (60), qui présente des sections de paroi de profil de raidissement (66) formant un angle les unes par rapport aux autres et/ou s'étendant de manière incurvée autour d'un axe longitudinal de profil de raidissement du profil de raidissement (60) et prend appui sur la paroi périphérique de profil porteur de l'au moins un profil porteur (40) pour raidir l'au moins un profil porteur (40),
dans lequel l'au moins un profil de raidissement (60) vient en prise avec l'espace intérieur (50) de l'au moins un profil porteur (40) ou l'au moins un profil porteur (40) vient en prise avec un espace intérieur de profil de raidissement de l'au moins un profil de raidissement (60), qui est délimité par les sections de paroi de profil de raidissement (66) dans une plage d'angle périphérique de plus de 180° s'étendant autour de l'axe longitudinal (43) de l'au moins un profil porteur (40), **caractérisé en ce qu'**est présent dans le cas d'un composant de profil porteur (40) ou de profil de raidissement (60) un évidement, avec lequel l'autre composant de profil porteur (40) ou de profil de raidissement (60) vient en prise.

2. Ensemble de support selon la revendication 1, **caractérisé en ce que** les parois périphériques du profil porteur (40) et/ou les sections de paroi de profil de raidissement (66) du profil de raidissement (60) sont fermées totalement et/ou de manière annulaire tour autour de l'axe longitudinal (43) dans la section de raidissement (51) et/ou forment une paroi périphérique (44) fermée de manière annulaire autour de l'axe longitudinal (43) du profil porteur (40) ou du profil de raidissement (60), et/ou que le profil de raidissement (60) est maintenu de manière imperdable sur le profil porteur (40) à l'aide d'une liaison directe et sans vissage au profil porteur (40) et de l'appui du profil de raidissement (60) sur le profil porteur (40).

3. Ensemble de support selon la revendication 1 ou 2, **caractérisé en ce que** le profil de raidissement (60) et/ou le profil porteur (40) présentent, en particulier dans la zone de la section de raidissement (51), une section transversale ronde et/ou une section transversale polygonale, en particulier une section transversale rectangulaire ou carrée, et/ou que l'au moins une section de paroi de profil de raidissement (66) repose à plat sur la paroi périphérique (44) du profil porteur (40), et/ou que le profil de raidissement (60) est logé en totalité dans l'espace intérieur (50) du profil porteur (40) et ne fait pas saillie de la paroi périphérique (44) du profil porteur (40), et/ou que le profil de raidissement (60) fait saillie dans la section de raidissement (51) devant un contour périphérique extérieur du profil porteur (40) sur au moins un côté, en particulier sur des côtés opposés les uns aux autres, et/ou que le profil de raidissement (60) s'étend de manière parallèle ou de manière sensiblement parallèle par rapport à l'axe longitudinal (43) du profil porteur (40) à côté d'au moins une section de sangle (54G, 55G) du profil porteur (40), en particulier est disposé entre deux sections de sangle (54G, 55G) de ce type, dans lequel l'au moins une section de sangle (54G, 55G) présente au moins deux sections de paroi périphérique de profil porteur (45-48) formant un angle entre elles de manière transversale par rapport à l'axe longitudinal (43) et/ou incurvées, en particulier disposées en forme de U ou en forme de L ou en forme de V dans la section transversale, et s'étendant le long de l'axe longitudinal (43).

4. Ensemble de support selon l'une quelconque des revendications précédentes, **caractérisé en ce que** le profil de raidissement (60) présente une branche de base (66J) et au moins une branche latérale (67J, 68J) (282) dépassant de la branche de base (66J), et/ou que le profil de raidissement (60) présente une section transversale en forme de C, en forme de U, en forme de V, en forme de E, en forme de W, en forme de T ou en forme de L, et/ou qu'une branche de base (66J) de l'au moins un profil de raidissement (60) est disposée à l'extérieur de l'espace intérieur (50) du profil porteur (40) et au moins une branche (67J, 68J) dépassant de la branche de base (66J) de l'au moins un profil de raidissement (60), en particulier toutes les branches (67J, 68J) dépassant de la branche de base (66J) viennent en prise avec l'espace intérieur (50) du profil porteur (40), dans lequel il est avantageusement prévu que la branche de base (66J) de l'au moins un profil de raidissement (60) prenne appui sur la paroi périphérique (44) de l'au moins un profil porteur (40) et/ou est reliée par liaison de matière et/ou par complémentarité de forme à la paroi périphérique (44) du profil porteur (40).

5. Ensemble de support selon l'une quelconque des revendications précédentes, **caractérisé en ce qu'**en position d'utilisation de l'ensemble de support (10), une extension en hauteur verticale du profil porteur (40) de manière transversale par rapport à un axe longitudinal (43) est plus grande qu'une extension en hauteur verticale du profil de raidissement (60) et/ou une distance entre des sections de paroi périphériques de profil porteur supérieures et inférieures (45-48) du profil porteur (40) est plus grande qu'une distance entre des parois de profil de raidissement supérieures et inférieures, et/ou qu'en position d'utilisation de l'ensemble de support (10), une extension en profondeur horizontale du profil porteur (40) de manière transversale par rapport à son axe longitudinal (43) est inférieure à une extension en profondeur horizontale du profil de raidissement (60) et/ou une distance entre des sections de paroi périphérique de profil porteur (45-48) les plus éloignées les unes des autres horizontalement du profil porteur (40) est inférieure à une distance entre des sections de profil de raidissement les unes éloignées les unes des autres horizontalement.

6. Ensemble de support selon l'une quelconque des revendications précédentes, **caractérisé en ce qu'**au moins une extrémité longitudinale (42), en particulier les deux extrémités longitudinales (42) du profil porteur (40), ne sont pas raidies par le profil de raidissement (60), et/ou que le profil porteur (40) est raidi par le profil de raidissement (60) sensiblement sur la totalité de sa longueur, et/ou que le profil porteur (40) est raidi par le profil de raidissement (60) dans la zone de son du fait de la liaison à un autre composant de l'ensemble porteur, en particulier à un support latéral (12, 13) à relier au véhicule (90) et/ou à la fixation (14) pour l'attelage de remorque (15) ou la partie d'attelage de support de charges, et/ou à une autre partie de profil.

7. Ensemble de support selon l'une quelconque des revendications précédentes, **caractérisé en ce que** le profil porteur (40) et le profil de raidissement (60) sont constitués de matériaux différents, en particulier le profil de raidissement (60) est constitué d'un matériau plus résistant que le profil porteur (40), et/ou que le profil porteur (40) et/ou le profil de raidissement (60) sont constitués de métal, en particulier d'acier, ou de matière plastique, en particulier de matière plastique renforcée par des fibres, et/ou que le profil de raidissement (60) est relié au profil porteur (40) par complémentarité de forme et/ou à force, en particulier avec un ajustement serré, et/ou par liaison de matière, en particulier par une liaison par soudage et/ou une liaison par coulage et/ou une liaison par brasage.

8. Ensemble de support selon l'une quelconque des revendications précédentes, **caractérisé en ce que** le profil de raidissement (60) ou le profil porteur (40) présente au moins un renfoncement s'étendant de manière transversale par rapport à l'axe longitudinal (43), en particulier une encoche ou une découpe, avec lesquels vient en prise une partie faisant saillie de maintien, fabriquée en particulier par déformation et s'étendant de manière transversale par rapport à l'axe longitudinal (43), de l'autre profil respectivement, du profil porteur (40) ou du profil de raidissement (60), et/ou que le profil de raidissement (60) est relié au profil porteur (40) par complémentarité de forme à l'aide d'un façonnage d'au moins un des profils, qui est mis en oeuvre dans l'état disposé les uns contre les autres des profils, et/ou que le profil de raidissement (60) est relié au profil porteur (40) à l'aide d'un façonnage intérieur à haute pression, en particulier d'un façonnage hydraulique, et/ou d'une déformation par incurvation, lors de laquelle les profils disposés les uns contre les autres sont déformés conjointement, si bien que les profils présentent une forme d'arc ou respectivement deux branches formant un angle l'une par rapport à l'autre.

9. Ensemble de support selon l'une quelconque des revendications précédentes, **caractérisé en ce qu'**au moins un espace intermédiaire entre le profil de raidissement (60) et le profil porteur (40) et/ou au moins un espace intérieur du profil de raidissement (60) ou du profil porteur (40) sont remplis d'un matériau de type mousse et/ou d'un matériau élastique.

10. Ensemble de support selon l'une quelconque des revendications précédentes, **caractérisé en ce que** le profil porteur (40) et le profil de raidissement (60) sont maintenus l'un sur l'autre à l'aide d'au moins un corps de maintien (80) séparé du profil porteur (40) et du profil de raidissement (60), dans lequel il est avantageusement prévu que le corps de maintien (80) est relié à la fixation (14) pour l'attelage de remorque (15) ou la partie d'attelage de support de charges ou est formé par la fixation (14), et/ou que le corps de maintien (80) abrite au moins en partie l'ensemble de profil porteur (40) et de profil de raidissement (60) dans la section de raidissement (51) ou forme un boîtier, et/ou que le corps de maintien (80) comprend une attache, qui accroche entre elles des sections partielles d'au moins un parmi le profil porteur (40) ou le profil de raidissement (60).

11. Ensemble de support selon l'une quelconque des revendications précédentes, **caractérisé en ce que** le profil porteur (40) et le profil de raidissement (60) sont reliés l'un à l'autre par complémentarité de forme par au moins une paire composée d'un logement par enfichage (59J) et d'une partie faisant saillie d'enfichage (65J), dans lequel la partie faisant saillie d'enfichage (65J) vient en prise avec l'au moins un logement par enfichage (59J), dans lequel il est avantageusement prévu que la partie faisant saillie d'enfichage (65J) est reliée en particulier est soudée, par liaison de matière au profil porteur (40) dans le logement par enfichage (59J), et/ou que le profil de raidissement (60) prend appui sur le profil porteur (40), en particulier sur un côté intérieur, tourné vers l'espace intérieur (50) du profil porteur (40), de la paroi périphérique (44) à côté de la partie faisant saillie d'enfichage (65J).

12. Ensemble de support selon l'une quelconque des revendications précédentes, **caractérisé en ce que** le profil de raidissement (60) ou le profil porteur (40) présentent un ensemble aligné de parties faisant saillie d'enfichage (65J) disposées côte à côte en particulier en une ligne d'alignement en particulier droite, qui viennent en prise avec un logement d'enfichage (59J) étiré en longueur s'étendant le long de la ligne d'alignement ou de logements par enfichage (59J) disposés en un ensemble aligné le long de la ligne d'alignement, dans lequel le logement par enfichage (59J) ou les logements par enfichage (59J) sont disposés sur l'autre respectivement parmi le profil de raidissement (60) et le profil porteur (40), dans lequel il est avantageusement prévu que le profil de raidissement (60) entre les parties faisant saillie d'enfichage prend appui sur le profil porteur (40), en particulier sur un côté intérieur, tourné vers l'espace intérieur (50) du profil porteur (40), de la paroi périphérique (44).

13. Ensemble de support selon l'une quelconque des revendications précédentes, **caractérisé en ce qu'**au moins un côté frontal (71) du profil de raidissement (60) présente par rapport à l'axe longitudinal (43) du profil porteur (40) un tracé oblique et/ou une incurvation pour réduire la contrainte d'encoches entre le profil porteur (40) et le profil de raidissement (60), et/ou que le profil de raidissement (60) et le profil porteur (40) présentent sur au moins une zone une distance l'un par rapport à l'autre, qui est réduite lors d'une déformation du profil de raidissement (60) et/ou du profil porteur (40) lors d'une contrainte d'impact (SB) liée en particulier à un accident, et/ou que le profil de raidissement (60) prend appui sur le profil porteur (40) lors d'une contrainte d'impact (SB) liée en particulier à un accident au sens d'un calage.

14. Ensemble de support selon l'une quelconque des revendications précédentes, **caractérisé en ce qu'**il présente une traverse (11) s'étendant en position d'utilisation de manière transversale par rapport à un axe longitudinal de véhicule (95) du véhicule (90), dont les zones d'extrémité longitudinale (41) sont maintenues sur des supports latéraux (12, 13), prévus pour être reliés au véhicule (90), de l'ensemble de support (10), dans lequel il est avantageusement prévu que la traverse (11) et/ou le support latéral (12, 13) présentent le profil porteur (40) raidi par le profil de raidissement (60) ou en sont formés, et/ou que le profil de raidissement (60) est présent sur le profil porteur (40) dans au moins une zone de liaison de la traverse (11) à un des supports latéraux (12, 13) ou aux deux supports latéraux (12, 13).

15. Ensemble de support selon l'une quelconque des revendications précédentes, **caractérisé en ce que** le profil de raidissement (60) est un composant séparé d'un composant de liaison destiné à relier le profil porteur (40) à un autre composant, en particulier à la fixation (14) et/ou à un autre profil de l'ensemble de support (10), et/ou que le profil porteur (40) et/ou le profil de raidissement (60) sont configurés en tant qu'un corps d'un seul tenant, et/ou que la paroi périphérique de profil porteur (44) et/ou les sections de paroi de profil de raidissement (66) sont fabriqués respectivement d'un seul tenant et/ou à partir d'une unique ébauche, et/ou que le profil porteur (40) et/ou le profil de raidissement (60) présentent une forme étirée en longueur, dans lequel leur longueur est, par rapport à l'axe longitudinal (43, 63) respective, au moins deux fois plus grand, de préférence au moins trois dois ou quatre fois ou cinq fois ou dix fois plus grand que leur diamètre, et/ou que le profil de raidissement (60), en particulier une paroi de base ou une branche de base (66J) du profil de raidissement (60), est disposé sur un côté, opposé à la partie arrière (91) dans l'état monté sur le véhicule (90) du profil porteur (40), du profil porteur (40), et/ou qu'une paroi de base ou une branche de base (66J) du profil de raidissement (60) s'étendent en position d'utilisation ou verticalement ou sensiblement verticalement, et/ou que le profil de raidissement (60) n'est pas prévu ou disposé pour relier deux sections partielles, en particulier des sections partielles formant un angle l'une par rapport à l'autre, du profil porteur (40) et/ou pour relier une traverse (11) à un support latéral (12, 13) de l'ensemble de support, et/ou que le profil de raidissement (60) ne fait pas saillie devant un côté supérieur et/ou un côté inférieur en position d'utilisation du profil porteur (40), et/ou que le profil porteur (40) fait saillie devant des extrémités longitudinales opposées les unes aux autres du profil de raidissement (60), et/ou que le profil de raidissement (60) sert exclusivement au raidissement du profil porteur (40) et/ou ne sert pas à relier le profil porteur (40) à un autre composant, en particulier à la fixation (14) ou au véhicule (90).
